# EUROPEAN PATENT APPLICATION

(11) **EP 4 797 573 A1**
(43) Date of publication of application: **26.08.2026**
(21) Application number: 24887624.5
(22) Date of filing: 11.09.2024
(51) Int. Cl.: H04B 10/2575

(54) **COMMUNICATION METHOD AND DEVICE**

(30) Priority: 10.11.2023 CN 202311507092
(71) Applicant: HUAWEI TECHNOLOGIES CO., LTD., Shenzhen, Guangdong 518129 (CN)
(72) Inventor: ZOU, Lingxiu, Shenzhen, Guangdong 518129 (CN); WANG, Tianxiang, Shenzhen, Guangdong 518129 (CN); WANG, Xiang, Shenzhen, Guangdong 518129 (CN); HAN, Dong, Shenzhen, Guangdong 518129 (CN); WANG, Xinyuan, Shenzhen, Guangdong 518129 (CN); ZHANG, Weiwei, Shenzhen, Guangdong 518129 (CN)
(74) Representative: Goddar, Heinz J.
(86) International application number: PCT/CN2024/118240
(87) International publication number: WO 2025/098006

(57) **Abstract**

This application relates to a communication method and device. The method includes: converting a received first digital optical signal into a first digital electrical signal, and performing communication protocol conversion on the first digital electrical signal, to obtain a second digital electrical signal; converting the second digital electrical signal into a first radio frequency electrical signal; and obtaining N first radio frequency optical signals based on the first radio frequency electrical signal, and sending the N first radio frequency optical signals.

## Description

This application claims priority to Chinese Patent Application No. 202311507092.8, filed with the China National Intellectual Property Administration on November 10, 2023 and entitled "COMMUNICATION METHOD AND DEVICE", which is incorporated herein by reference in its entirety.

### TECHNICAL FIELD

This application relates to the field of communication technologies, and in particular, to a communication method and device.

### BACKGROUND

As the internet, smart home, and virtual reality devices develop, the demand for higher network speeds has been continuously increasingly in home scenarios. In response to this demand, a fiber to the room (fiber to the room, FTTR) solution has been proposed.

An optical communication network used in the existing FTTR solution mainly includes a primary optical modem and a plurality of secondary optical modems, and the primary optical modem and the plurality of secondary optical modems are connected via splitters. In actual operations, after receiving a digital optical signal 1 from an optical line terminal (optical line terminal, OLT), the primary optical modem mainly implements the following functions: (1) Convert the digital optical signal 1 into a digital electrical signal 1 via an optical module. (2) Perform an operation like data format conversion on the digital electrical signal 1 via a component like a field programmable logic gate array (field programmable gate array, FPGA), to obtain a digital electrical signal 2. (3) Provide corresponding data interfaces for an optical module and a mobile hotspot (namely, Wi-Fi) chip on the secondary optical modem side via a gateway control chip, perform communication protocol conversion on the digital electrical signal 2, to obtain a digital electrical signal 3, and distribute the digital electrical signal 3 to the optical module and the Wi-Fi chip on the secondary optical modem side. (4) Convert, via a Wi-Fi chip, a radio frequency front-end module, and an antenna, the digital electrical signal into an analog radio frequency electrical signal, process and send the analog radio frequency electrical signal, and send a radio frequency signal. (5) Convert the digital electrical signal 3 into a digital optical signal 2, and send the digital optical signal 2 to the optical splitter via the optical module on the secondary optical modem side. The optical splitter is configured to distribute the digital optical signal 2 to the plurality of secondary optical modems. Each of the secondary optical modems mainly implements the following functions: (1) Convert the digital optical signal 2 into a digital electrical signal 4 via an optical module. (2) Perform communication protocol conversion on the digital electrical signal 4 via a gateway control chip to obtain a digital electrical signal 5. (3) Convert, via a Wi-Fi chip, a radio frequency front-end module, and an antenna, the digital electrical signal into an analog radio frequency electrical signal, and process and send the analog radio frequency electrical signal. In the optical communication network, the primary optical modem and the secondary optical modem need to process a large quantity of data and signals, resulting in complex hardware structures of the primary optical modem and the secondary optical modem, and high power consumption. In addition, a communication delay is high between the primary optical modem and the secondary optical modem. Especially, an uplink waiting delay of each secondary optical modem is high due to the manner of distributing an optical signal via the splitter. This further exacerbates the delay problem. Therefore, the optical communication network used in the existing FTTR solution has high power consumption and a high delay. As a result, the FTTR solution has poor applicability and practicability.

### SUMMARY

To resolve the foregoing problem, this application provides a communication method and device. The communication method can be used to reduce power consumption and delays of the communication device and an electronic device and further reduce power consumption and delays of an optical communication network including the communication device and the electronic device.

According to a first aspect, this application provides a communication method. The method is applicable to a communication device. The method includes: receiving a first digital optical signal, and converting the first digital optical signal into a first digital electrical signal; converting the first digital electrical signal into a second digital electrical signal, where the first digital electrical signal and the second digital electrical signal correspond to different communication protocols; converting the second digital electrical signal into a first radio frequency electrical signal; and obtaining N first radio frequency optical signals based on the first radio frequency electrical signal, where N is a positive integer greater than or equal to 1; and sending the N first radio frequency optical signals.

In the foregoing implementation, the communication device processes the received digital optical signal into the radio frequency optical signal, and sends the radio frequency optical signal to an electronic device. Because the communication device sends the radio frequency optical signal, complex signal processing operations such as first converting the digital optical signal into a digital electrical signal and then converting the digital electrical signal into a digital optical signal are avoided. In this way, a hardware structure of the communication device can be simplified, and power consumption of the communication device can be reduced. In addition, because fewer signal processing operations need to be performed, a signal delay of the communication device is also smaller. Therefore, the communication method is used to help reduce a delay and power consumption of the communication device.

With reference to the first aspect, in a feasible implementation, filtering and/or amplification processing may be performed on the first radio frequency electrical signal to obtain a second radio frequency electrical signal, and the N first radio frequency optical signals may be obtained based on the second radio frequency electrical signal.

With reference to the first aspect, in a feasible implementation, N is a positive integer greater than or equal to 2. The N third radio frequency electrical signals may be obtained through splitting based on the second radio frequency electrical signal. The N third radio frequency electrical signals may be converted into the N first radio frequency optical signals.

With reference to the first aspect, in a feasible implementation, the method further includes: receiving N second radio frequency optical signals; converting the N second radio frequency optical signals into N fourth radio frequency electrical signals, and combining the N fourth radio frequency electrical signals into a fifth radio frequency electrical signal; performing filtering and/or amplification processing on the fifth radio frequency electrical signal, to obtain a sixth radio frequency electrical signal; converting the sixth radio frequency electrical signal into a third digital signal, and converting the third digital signal into a fourth digital signal, where the third digital electrical signal and the second digital electrical signal correspond to a same communication protocol, and the first digital electrical signal and the fourth digital electrical signal correspond to a same communication protocol; and converting the fourth digital electrical signal into a second digital optical signal, and sending the second digital optical signal.

With reference to the first aspect, in a feasible implementation, the method further includes: generating a seventh radio frequency electrical signal, and performing filtering and/or amplification processing on the seventh radio frequency electrical signal, to obtain an eighth radio frequency electrical signal; splitting the eighth radio frequency electrical signal, to obtain N ninth radio frequency electrical signals; respectively converting the N ninth radio frequency electrical signals to obtain N third radio frequency optical signals; and sending the N third radio frequency optical signals.

With reference to the first aspect, in a feasible implementation, the method further includes: receiving N fourth radio frequency optical signals, where the N fourth radio frequency optical signals are feedback signals of the N third radio frequency optical signals; converting the N fourth radio frequency optical signals into N tenth radio frequency electrical signals, and combining the N tenth radio frequency electrical signals into an eleventh radio frequency electrical signal; performing filtering and/or amplification processing on the eleventh radio frequency electrical signal, to obtain a twelfth radio frequency electrical signal; and performing power calibration and/or delay calibration based on the seventh radio frequency electrical signal and the twelfth radio frequency electrical signal.

With reference to the first aspect, in a feasible implementation, N is equal to 1. The first radio frequency electrical signal may be converted into a first radio frequency optical signal. In this case, sending the N first radio frequency optical signals may be understood as sending the first radio frequency optical signal.

With reference to the first aspect, in a feasible implementation, the method further includes: receiving M second radio frequency optical signals, where M is a positive integer greater than or equal to 2; converting the M second radio frequency optical signals into M third radio frequency electrical signals; respectively performing filtering and/or amplification processing on the M third radio frequency electrical signals to obtain M fourth radio frequency electrical signals; converting the M fourth radio frequency electrical signals into M third digital electrical signals, and obtaining a fourth digital electrical signal based on the M third digital electrical signals, where the third digital electrical signal and the second digital electrical signal correspond to a same communication protocol, and the first digital electrical signal and the fourth digital electrical signal correspond to a same communication protocol; and converting the fourth digital electrical signal into a second digital optical signal, and sending the second digital optical signal.

With reference to the first aspect, in a feasible implementation, the method further includes: generating a fifth radio frequency electrical signal, and performing filtering and/or amplification processing on the fifth radio frequency electrical signal, to obtain a sixth radio frequency electrical signal; converting the sixth radio frequency electrical signal into a third radio frequency optical signal, and sending the third radio frequency optical signal; receiving a fourth radio frequency optical signal, where the fourth radio frequency optical signal is a feedback signal of the third radio frequency optical signal; converting the fourth radio frequency optical signal into a seventh radio frequency electrical signal, and performing filtering and/or amplification processing on the seventh radio frequency electrical signal, to obtain an eighth radio frequency electrical signal; and performing power calibration and/or delay calibration based on the eighth radio frequency electrical signal and the fifth radio frequency electrical signal.

According to a second aspect, this application provides a communication method. The method is applicable to an electronic device. The method includes: receiving a first radio frequency optical signal; converting the first radio frequency optical signal into a twelfth radio frequency electrical signal; performing filtering and/or amplification processing based on the twelfth radio frequency electrical signal, to obtain a thirteenth radio frequency electrical signal; and sending the thirteenth radio frequency electrical signal.

In the foregoing implementation, because the electronic device receives a radio frequency optical signal, the electronic device does not need to perform conversion between a digital optical signal and a digital electrical signal, and does not need to perform conversion between communication protocols. The electronic device only needs to convert the received radio frequency optical signal into a corresponding radio frequency electrical signal, and then, performs filtering and amplification processing to transmit a radio frequency electrical signal. Therefore, according to the method, the electronic device provided has a simpler structure, and needs to perform fewer signal processing operations. In this case, a transmission delay generated by a signal at the electronic device is shorter, and power consumption of the electronic device is lower. Therefore, the communication method is used to help reduce a delay and power consumption of the electronic device.

With reference to the second aspect, in a feasible implementation, filtering and/or amplification processing may be performed on the twelfth radio frequency electrical signal, to obtain the thirteenth radio frequency electrical signal.

With reference to the second aspect, in a feasible implementation, the twelfth radio frequency electrical signal may be decomposed into a fourteenth radio frequency electrical signal and a fifteenth radio frequency electrical signal, where the fourteenth radio frequency electrical signal and the fifteenth radio frequency electrical signal correspond to different frequency bands; and filtering and/or amplification processing is performed on the fourteenth radio frequency electrical signal, to obtain the thirteenth radio frequency electrical signal.

With reference to the second aspect, in a feasible implementation, the method further includes: performing filtering and/or amplification processing on the fifteenth radio frequency electrical signal, to obtain a sixteenth radio frequency electrical signal; and sending the sixteenth radio frequency electrical signal.

With reference to the second aspect, in a feasible implementation, the method further includes: receiving a seventeenth radio frequency electrical signal; performing filtering and/or amplification processing on the seventeenth radio frequency electrical signal, to obtain an eighteenth radio frequency electrical signal; and processing the eighteenth radio frequency electrical signal to obtain a second radio frequency optical signal, and sending the second radio frequency optical signal.

With reference to the second aspect, in a feasible implementation, the eighteenth radio frequency electrical signal may be converted into the second radio frequency optical signal.

With reference to the second aspect, in a feasible implementation, the method further includes: receiving a nineteenth radio frequency electrical signal. The nineteenth radio frequency electrical signal and the seventeenth radio frequency electrical signal correspond to different frequency bands.

With reference to the second aspect, in a feasible implementation, filtering and/or amplification processing may be performed on the nineteenth radio frequency electrical signal, to obtain a twentieth radio frequency electrical signal. The twentieth radio frequency electrical signal and the eighteenth radio frequency electrical signal is combined to obtain a twenty-first radio frequency electrical signal, and the twenty-first radio frequency electrical signal is converted into the second radio frequency optical signal.

With reference to the second aspect, in a feasible implementation, the method further includes: receiving a third radio frequency optical signal, and converting the third radio frequency optical signal into the twenty-second radio frequency electrical signal; performing filtering and/or amplification processing on the twenty-second radio frequency electrical signal, to obtain a twenty-third radio frequency electrical signal; performing filtering and/or amplification processing on the twenty-third radio frequency electrical signal, to obtain a twenty-fourth radio frequency electrical signal; and converting the twenty-fourth radio frequency electrical signal into a fourth radio frequency optical signal, and sending the fourth radio frequency optical signal.

According to a third aspect, this application provides a communication device. The communication method provided in any one of the first aspect or the optional implementations of the first aspect is applicable to the communication device. The communication device includes a second optical module, a gateway control module, a radio frequency conversion module, and a radio frequency transceiver module. The second optical module is configured to: receive a first digital optical signal, and convert the first digital optical signal into a first digital electrical signal. The gateway control module is configured to convert the first digital electrical signal into a second digital electrical signal, where the first digital electrical signal and the second digital electrical signal correspond to different communication protocols. The radio frequency conversion module is configured to convert the second digital electrical signal into a first radio frequency electrical signal. The radio frequency transceiver module is configured to: obtain N first radio frequency optical signals based on the first radio frequency electrical signal, and send the N first radio frequency optical signals, where N is a positive integer greater than or equal to 1.

In the foregoing implementation, for the communication device, because transmission is performed between the communication device and an electronic device by using a radio frequency optical signal, the gateway control module of the communication device only needs to provide a data interface for the radio frequency conversion module. The gateway control module may provide more data processing capabilities for the communication device. In this way, the communication device can implement more data processing operations via the gateway control module, and does not need to rely on components such as an FPGA to perform an operation like data format conversion as an existing primary optical network terminal. Therefore, the communication device can save components such as the FPGA. Because components such as the FPGA does not need to be used for data processing, a transmission delay generated by using a signal at the communication device is reduced, and power consumption of the communication device is also reduced.

With reference to the third aspect, in a possible implementation, the radio frequency transceiver module includes a filtering and amplification module and a transceiver module. The filtering and amplification module is configured to perform filtering and/or amplification processing on the first radio frequency electrical signal, to obtain a second radio frequency electrical signal. The transceiver module is configured to obtain N first radio frequency optical signals based on the second radio frequency electrical signal.

With reference to the third aspect, in a possible implementation, the filtering and amplification module includes a fifth filter amplifier, and the transceiver module includes a first radio frequency power divider and M third optical modules. M is a positive integer greater than or equal to 2, and N is equal to M. The fifth filter amplifier is configured to perform filtering and/or amplification processing on the first radio frequency electrical signal, to obtain the second radio frequency electrical signal. The first radio frequency power divider is configured to split the second radio frequency electrical signal, to obtain M third radio frequency electrical signals. The M third optical modules are configured to: respectively convert the M third radio frequency electrical signals to obtain M first radio frequency optical signals, and transmit the M first radio frequency optical signals.

With reference to the third aspect, in a possible implementation, the filtering and amplification module further includes a sixth filter amplifier, and the transceiver module further includes a second radio frequency power divider. The M third optical modules are further configured to: receive M second radio frequency optical signals, and convert the M second radio frequency optical signals into M fourth radio frequency electrical signals. The second radio frequency power divider is further configured to combine the M fourth radio frequency electrical signals into a fifth radio frequency electrical signal. The sixth filter amplifier is configured to perform filtering and/or amplification processing on the fifth radio frequency electrical signal, to obtain a sixth radio frequency electrical signal. The radio frequency conversion module is further configured to convert the sixth radio frequency electrical signal into a third digital signal. The gateway control module converts the third digital signal into a fourth digital signal. The third digital electrical signal and the second digital electrical signal correspond to a same communication protocol, and the first digital electrical signal and the fourth digital electrical signal correspond to a same communication protocol. The second optical module is further configured to: convert the fourth digital electrical signal into a second digital optical signal, and send the second digital optical signal.

In the foregoing implementation, the radio frequency electrical signals are combined and split via the two radio frequency power dividers. In this way, a quantity of channels of the radio frequency conversion module can be reduced, thereby reducing costs of the communication device.

With reference to the third aspect, in a possible implementation, the radio frequency conversion module is further configured to generate a seventh radio frequency electrical signal. The fifth filter amplifier is further configured to perform filtering and/or amplification processing on the seventh radio frequency electrical signal, to obtain an eighth radio frequency electrical signal. The first power divider is further configured to split the eighth radio frequency electrical signal, to obtain M ninth radio frequency electrical signals. The M third optical modules are further configured to: respectively convert the M ninth radio frequency electrical signals to obtain M third radio frequency optical signals, and send the M third radio frequency optical signals. The M third optical modules are further configured to receive M fourth radio frequency optical signals, where the M fourth radio frequency optical signals are feedback signals of the M third radio frequency optical signals. The M third optical modules further convert the N fourth radio frequency optical signals into N tenth radio frequency electrical signals. The second power divider is further configured to combine the N tenth radio frequency electrical signals into an eleventh radio frequency electrical signal. The sixth filter amplifier is configured to perform filtering and/or amplification processing on the eleventh radio frequency electrical signal, to obtain a twelfth radio frequency electrical signal. The radio frequency conversion module is further configured to perform power calibration and/or delay calibration based on the seventh radio frequency electrical signal and the twelfth radio frequency electrical signal.

With reference to the third aspect, in a possible implementation, N is equal to 1, the radio frequency conversion module includes M radio frequency conversion submodules, the filtering and amplification module includes M seventh filter amplifiers, the transceiver module includes M third optical modules, and the M radio frequency conversion submodules are respectively connected to the M third optical modules via the M seventh filter amplifiers, where M is a positive integer greater than or equal to 2. A target radio frequency conversion submodule in the M radio frequency conversion submodules is configured to convert the second digital electrical signal into a first radio frequency electrical signal. A target seventh filter amplifier in the M seventh filter amplifiers is configured to perform filtering and/or amplification processing on the first radio frequency electrical signal, to obtain the second radio frequency electrical signal. A target third optical module in the M third optical modules is configured to: obtain a first radio frequency optical signal based on the second radio frequency electrical signal, and send the first radio frequency optical signal.

In the foregoing implementation, the communication device uses such an architecture, so that each electronic device has an independent channel. In this way, a channel capacity between the communication device and the electronic device can be improved.

With reference to the third aspect, in a possible implementation, the filtering and amplification module further includes M eighth filter amplifiers, and the M radio frequency conversion submodules are further respectively connected to the M third optical modules via the M eighth filter amplifiers. The M third optical modules are further configured to: receive M second radio frequency optical signals, and convert the M second radio frequency optical signals into M third radio frequency electrical signals. The M eighth filter amplifiers are further configured to respectively perform filtering and/or amplification processing on the M third radio frequency electrical signals to obtain M fourth radio frequency electrical signals. The M radio frequency conversion submodules are further configured to convert the M fourth radio frequency electrical signals into M third digital electrical signals. The gateway control module is further configured to obtain a fourth digital electrical signal based on the M third digital electrical signals. The third digital electrical signal and the second digital electrical signal correspond to a same communication protocol, and the first digital electrical signal and the fourth digital electrical signal correspond to a same communication protocol. The second optical module is further configured to: convert the fourth digital electrical signal into a second digital optical signal, and send the second digital optical signal.

With reference to the third aspect, in a possible implementation, the filtering and amplification module further includes M eighth filter amplifiers, and the M radio frequency conversion submodules are further respectively connected to the M third optical modules via the M eighth filter amplifiers. The M third optical modules are further configured to: receive M second radio frequency optical signals, and convert the M second radio frequency optical signals into M third radio frequency electrical signals. The M eighth filter amplifiers are further configured to respectively perform filtering and/or amplification processing on the M third radio frequency electrical signals to obtain M fourth radio frequency electrical signals. The M radio frequency conversion submodules are further configured to convert the M fourth radio frequency electrical signals into M third digital electrical signals. The gateway control module is further configured to obtain a fourth digital electrical signal based on the M third digital electrical signals. The third digital electrical signal and the second digital electrical signal correspond to a same communication protocol, and the first digital electrical signal and the fourth digital electrical signal correspond to a same communication protocol. The second optical module is further configured to: convert the fourth digital electrical signal into a second digital optical signal, and send the second digital optical signal.

With reference to the third aspect, in a possible implementation, the target radio frequency conversion submodule is further configured to generate a fifth radio frequency electrical signal. The target seventh filter amplifier is further configured to perform filtering and/or amplification processing on the fifth radio frequency electrical signal, to obtain a sixth radio frequency electrical signal. The target third optical module is further configured to: convert the sixth radio frequency electrical signal into a third radio frequency optical signal, and send the third radio frequency optical signal.

With reference to the third aspect, in a possible implementation, the target third optical module is further configured to: receive a fourth radio frequency optical signal, and convert the fourth radio frequency optical signal into a seventh radio frequency electrical signal, where the fourth radio frequency optical signal is a feedback signal of the third radio frequency optical signal. The target seventh filter amplifier is further configured to perform filtering and/or amplification processing on the seventh radio frequency electrical signal, to obtain an eighth radio frequency electrical signal. The target radio frequency conversion submodule is further configured to perform power calibration and/or delay calibration based on the eighth radio frequency electrical signal and the fifth radio frequency electrical signal.

According to a fourth aspect, this application further provides an electronic device. The communication method provided in any one of the second aspect or the optional implementations of the second aspect is applicable to an electronic device. With reference to the fourth aspect, in a possible implementation, the electronic device includes a first optical module, a first filter amplifier, and a first antenna. The first optical module is configured to convert a received first radio frequency optical signal into a twelfth radio frequency electrical signal. The first filter amplifier is configured to perform filtering and amplification based on the twelfth radio frequency electrical signal, to obtain a thirteenth radio frequency electrical signal. The first antenna is configured to transmit the thirteenth radio frequency electrical signal.

In the foregoing implementation, for the electronic device, because the electronic device receives a radio frequency optical signal, the electronic device does not need to perform conversion between a digital optical signal and a digital electrical signal, and does not need to perform conversion between communication protocols. The electronic device only needs to convert the received radio frequency optical signal into a corresponding radio frequency electrical signal, and then, performs filtering and amplification processing to transmit a radio frequency electrical signal. Therefore, compared with an existing secondary optical modem, the electronic device provided in this application has a simpler structure, and needs to perform fewer signal processing operations. In this case, a transmission delay generated by a signal at the electronic device is shorter, and power consumption of the electronic device is lower. In addition, because a communication device is directly connected to each electronic device instead of being indirectly connected via a splitter, uplink concurrency of a plurality of electronic devices is supported. In this way, an uplink waiting delay of each electronic device can be avoided, thereby further reducing the delay generated by the signal at the electronic device.

With reference to the fourth aspect, in a possible implementation, the electronic device further includes a first duplexer, a second filter amplifier, and a second antenna. The first duplexer is configured to decompose the twelfth radio frequency electrical signal into a fourteenth radio frequency electrical signal and a fifteenth radio frequency electrical signal, where the fourteenth radio frequency electrical signal and the fifteenth radio frequency electrical signal correspond to different frequency bands. The second filter amplifier is configured to perform filtering and/or amplification processing on the fifteenth radio frequency electrical signal, to obtain a sixteenth radio frequency electrical signal. The second antenna is configured to send the sixteenth radio frequency electrical signal. That the first filter amplifier is configured to perform filtering and amplification based on the twelfth radio frequency electrical signal, to obtain the thirteenth radio frequency electrical signal includes: The first filter amplifier is configured to perform filtering and/or amplification processing on the fourteenth radio frequency electrical signal, to obtain the thirteenth radio frequency electrical signal.

In the foregoing implementation, by using an advantage of radio frequency optical signal transmission, the electronic device can support a larger downlink transmission bandwidth based on the first duplexer and a multi-antenna design. This helps reduce complexity and costs of the structure of the electronic device.

With reference to the fourth aspect, in a possible implementation, the electronic device further includes a third filter amplifier and a third antenna. The third antenna is configured to receive a seventeenth radio frequency electrical signal. The third filter amplifier is configured to perform filtering and/or amplification processing on the seventeenth radio frequency electrical signal, to obtain an eighteenth radio frequency electrical signal. The first optical module is further configured to: obtain a second radio frequency optical signal based on the eighteenth radio frequency electrical signal, and send the second radio frequency optical signal.

With reference to the fourth aspect, in a possible implementation, the electronic device further includes a second duplexer, a third filter amplifier, a third antenna, a fourth filter amplifier, and a fourth antenna. The third antenna is configured to receive a seventeenth radio frequency electrical signal. The third filter amplifier is configured to perform filtering and/or amplification processing on the seventeenth radio frequency electrical signal, to obtain an eighteenth radio frequency electrical signal. The fourth antenna is configured to receive a nineteenth radio frequency electrical signal, where the nineteenth radio frequency electrical signal and the seventeenth radio frequency electrical signal correspond to different frequency bands. The fourth filter amplifier is configured to perform filtering and/or amplification processing on the nineteenth radio frequency electrical signal, to obtain a twentieth radio frequency electrical signal. The duplexer is configured to combine the twentieth radio frequency electrical signal and the eighteenth radio frequency electrical signal, to obtain a twenty-first radio frequency electrical signal. The first optical module is further configured to convert the twenty-first radio frequency electrical signal into a second radio frequency optical signal, and send the second radio frequency optical signal.

In the foregoing implementation, by using the advantage of radio frequency optical signal transmission, the electronic device can support a larger downlink and uplink transmission bandwidth based on the first duplexer, the second duplexer, and a multi-antenna design. This further helps reduce complexity and costs of the structure of the electronic device.

With reference to the fourth aspect, in a possible implementation, the electronic device further includes a controller, a coupler, and a switch component. The first filter amplifier is connected to the first antenna via the coupler, the third filter amplifier is connected to the third antenna via the switch component, and the coupler is connected to the switch component. When it is determined that the electronic device normally communicates, the controller is configured to control the switch component, so that the coupler is disconnected from the third filter amplifier and the third antenna is connected to the third filter amplifier. When it is determined that closed-loop check is performed on the electronic device, the controller is configured to control the switch component, so that the coupler is connected to the third filter amplifier and the third antenna is disconnected from the third filter amplifier.

In the foregoing implementation, through functions of the coupler and the switch component, the electronic device can implement the closed-loop check by reusing the uplink and downlink channels of the electronic device. In this way, the electronic device does not need to introduce an independent calibration channel to implement the closed-loop check, thereby reducing complexity and costs of the structure of the electronic device.

With reference to the fourth aspect, in a possible implementation, the first optical module is configured to convert a received third radio frequency optical signal into a twenty-second radio frequency electrical signal. The first filter amplifier is configured to perform filtering and/or amplification processing on the twenty-second radio frequency electrical signal, to obtain a twenty-third radio frequency electrical signal. The coupler is configured to transmit the twenty-third radio frequency electrical signal to the switch component. The switch component is configured to transmit the twenty-third radio frequency electrical signal to the third filter amplifier. The third filter amplifier is configured to perform filtering and/or amplification processing on the twenty-third radio frequency electrical signal, to obtain a twenty-fourth radio frequency electrical signal. The first optical module is further configured to convert the twenty-fourth radio frequency electrical signal into a fourth radio frequency optical signal, and send the fourth radio frequency optical signal.

According to a fifth aspect, this application further provides an optical communication network. The optical communication network includes the communication device according to the third aspect and a plurality of electronic devices according to the third aspect.

According to a sixth aspect, this application further provides a communication apparatus. The communication apparatus may be configured to implement the communication method according to any one of the first aspect or the possible implementations of the first aspect.

With reference to the sixth aspect, in a possible implementation, the communication apparatus includes a communication device, a chip, a central unit CU, or a distributed unit DU.

According to a seventh aspect, this application further provides a communication apparatus. The communication apparatus may be configured to implement the communication method provided in any one of the second aspect or the possible implementations of the second aspect.

With reference to the seventh aspect, in a possible implementation, the communication apparatus includes an electronic device, a chip, or a chip system.

In conclusion, the communication method, the communication device, and the electronic device provided in embodiments of this application can be used to reduce power consumption and a delay of an optical communication network including the communication device and the electronic device.

### BRIEF DESCRIPTION OF DRAWINGS

FIG. 1 is a diagram of a structure of an optical communication network according to this application;
FIG. 2 is a diagram of a structure of an electronic device according to this application;
FIG. 3 is a diagram of another structure of an electronic device according to this application;
FIG. 4 is a diagram of another structure of an electronic device according to this application;
FIG. 5 is a diagram of a structure of a communication device according to this application;
FIG. 6 is a diagram of a structure of a communication device according to this application;
FIG. 7 is a diagram of another structure of a communication device according to this application;
FIG. 8 is a diagram of another structure of a communication device according to this application;
FIG. 9 is a diagram of another structure of a communication device according to this application;
FIG. 10 is a diagram of another structure of a communication device according to this application;
FIG. 11 is a diagram of another structure of a communication device according to this application;
FIG. 12 is a diagram of another structure of a communication device according to this application;
FIG. 13 is a diagram of another structure of a communication device according to this application;
FIG. 14 is a diagram of another structure of an electronic device according to this application;
FIG. 15 is a diagram of another structure of a communication device according to this application;
FIG. 16 is a diagram of another structure of a communication device according to this application;
FIG. 17 is a schematic flowchart of a communication method according to this application; and
FIG. 18 is a schematic flowchart of a communication method according to this application.

### DESCRIPTION OF EMBODIMENTS

The following clearly and completely describes technical solutions in embodiments of this application with reference to accompanying drawings in embodiments of this application.

In various embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

In this application, "at least one" means one or more, and "a plurality of" means at least two (including two). "And/or" describes an association relationship between associated objects, and indicates that three relationships may exist. For example, A and/or B may indicate the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An optical communication network used in an existing FTTR solution usually includes a primary optical modem and a plurality of secondary optical modems, and the primary optical modem is connected to each secondary optical modem via a splitter. The primary optical modem and the secondary optical modem need to process a large quantity of data and signals, resulting in complex hardware structures of the primary optical modem and the secondary optical modem, and high power consumption. In addition, a communication delay is high between the primary optical modem and the secondary optical modem. Especially, an uplink waiting delay of each secondary optical modem is high due to a manner of distributing an optical signal via the splitter. This further exacerbates the delay problem. Therefore, the existing optical communication network has high power consumption and a high delay, which affects applicability and practicability of the FTTR solution.

Therefore, a technical problem to be resolved in this application is how to reduce power consumption and a delay of the optical communication network, to improve applicability and practicability of the FTTR solution.

### Embodiment 1

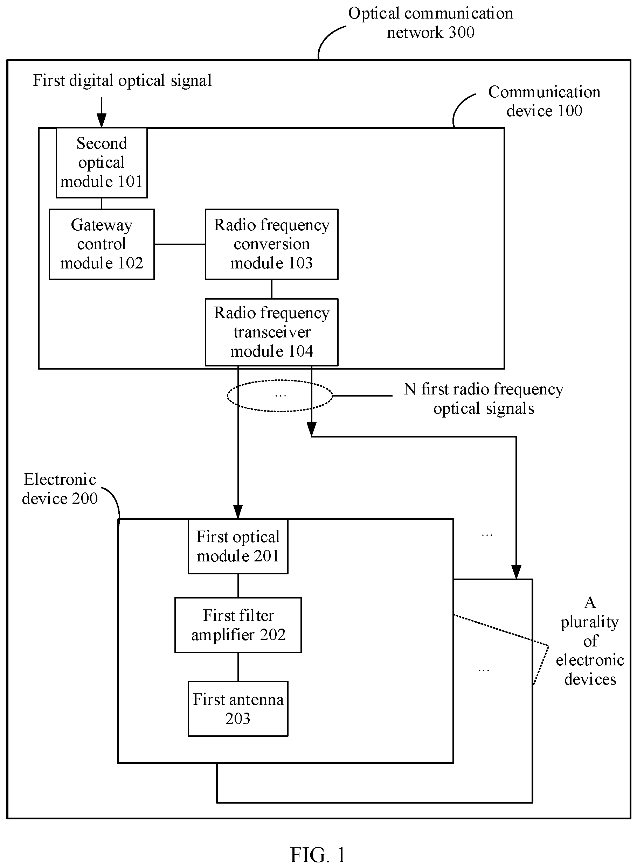

FIG. 1 is a diagram of a structure of an optical communication network according to this application. As shown in FIG. 1, the optical communication network 300 mainly includes a communication device 100 and M electronic devices. M is a positive integer greater than or equal to 2. It should be noted that, in this embodiment of this application, because structures and function implementations of all electronic devices are similar, to avoid repetition, in this application, the electronic device 200 in the M electronic devices is used as an example to describe structures and functions of the M electronic devices in a unified manner. It should be noted that names of the communication device 100 and the M electronic devices are merely examples. In some possible implementations, the communication device 100 may also be referred to as a primary communication device 100, and the electronic device 200 may also be referred to as a secondary communication device 200. Alternatively, the communication device 100 may also be referred to as a first optical communication device 100, and the electronic device 200 may also be referred to as a second optical communication 200. This is not specifically limited in this application. It should be further noted that, in this embodiment of this application, a process of transmitting a signal from the communication device 100 to the electronic device 200 is defined as downlink, and a process of transmitting a signal from the electronic device 200 to the communication device 100 is defined as uplink. Correspondingly, a transmission medium through which a signal passes in a downlink process may be referred to as a downlink channel or a downlink, and a transmission medium through which a signal passes in an uplink process may be referred to as an uplink channel or an uplink.

As shown in FIG. 1, the communication device 100 may include a second optical module 101, a gateway control module 102, a radio frequency conversion module 103, and a radio frequency transceiver module 104. The second optical module 101 is connected to the gateway control module 102, the gateway control module 102 is connected to the radio frequency conversion module 103, the radio frequency conversion module 103 is connected to the radio frequency transceiver module 104, and the radio frequency transceiver module 104 is further separately connected to each of the M electronic devices. The electronic device 200 mainly includes a first optical module 201, a first filter amplifier 202, and a first antenna 203. It should be noted that the filter amplifier in this application is a functional component that can filter and/or amplify a radio frequency electrical signal. An implementation of the filter amplifier is not required in this application.

In actual operation, the second optical module 101 is configured to receive a first digital optical signal. It should be noted that the first digital optical signal may come from another device or apparatus connected to the communication device 100. For example, the first digital optical signal may come from an OLT connected to the communication device 100, or the first digital optical signal may come from a network unit (optical network unit, ONU) connected to the communication device 100. After receiving the first digital optical signal, the second optical module 101 may convert the first digital optical signal into a first digital electrical signal, and send the first digital electrical signal to the gateway control module 102. It should be noted herein that, in this embodiment of this application, conversion between signals is direct conversion, that is, conversion directly completed via an independent chip, circuit, or module, instead of indirect conversion completed only via a plurality of chips, circuits, or modules. For example, converting the first digital optical signal into the first digital electrical signal described above means converting the first digital optical signal into the first digital electrical signal via the second optical module 101, without first converting the first digital optical signal into an intermediate signal via a chip, a circuit, or a module other than the second optical module 101, and then converting the intermediate signal into the first digital electrical signal via the second optical module 101. All conversions below are the same. To avoid repetition, details are not described again.

The gateway control module 102 may be configured to: convert the first digital electrical signal into a second digital electrical signal, and send the second digital electrical signal to the radio frequency conversion module 103. The first digital electrical signal and the second digital electrical signal correspond to different communication protocols. In other words, the gateway control module 102 is configured to perform communication protocol conversion on the first digital electrical signal, to obtain the corresponding second digital electrical signal. For example, it is assumed that the first digital electrical signal meets the PON protocol, and transmission between the gateway control module 102 and the radio frequency conversion module 103 is based on the Wi-Fi communication protocol. In this case, the gateway control module 102 may convert the first digital electrical signal that meets the PON protocol into the second digital signal that meets the Wi-Fi communication protocol.

The radio frequency conversion module 103 is configured to convert the second digital electrical signal into a first radio frequency electrical signal, and send the first radio frequency electrical signal to the radio frequency transceiver module 104. Optionally, the radio frequency conversion module 103 is configured to perform digital-to-analog conversion on the second digital electrical signal, to obtain the corresponding first radio frequency electrical signal.

The radio frequency transceiver module 104 is configured to: obtain N first radio frequency optical signals based on the first radio frequency electrical signal, and respectively send the N first radio frequency optical signals to N electronic devices in the M electronic devices. N is a positive integer greater than or equal to 1, and the N electronic devices include the electronic device 200. It should be understood that respectively sending the N first radio frequency optical signals to the N electronic devices in the M electronic devices means sending one unique first radio frequency optical signal among the N first radio frequency optical signals to each of the N electronic devices, and each of the N electronic devices receives only one first radio frequency optical signal.

Further, the first optical module 201 is configured to: receive one of the N first radio frequency optical signals, convert the first radio frequency optical signal into a twelfth radio frequency electrical signal, and send the twelfth radio frequency electrical signal to the first filter amplifier 202.

The first filter amplifier 202 is configured to: perform filtering and amplification based on the twelfth radio frequency electrical signal to obtain a thirteenth radio frequency electrical signal, and send the thirteenth radio frequency electrical signal to the first antenna 203. The first antenna 203 may be configured to transmit the thirteenth radio frequency electrical signal. It should be understood that, in this embodiment of this application, the antenna is mainly configured to send a radio frequency electrical signal to a device or an apparatus that establishes a wireless communication connection to the electronic device 200 through the antenna, or receive radio frequency electrical signals from the device or the apparatus. The device or the apparatus herein may be a mobile phone, a computer, a wearable device, or the like. This is not limited in this application.

In the foregoing implementation, for the communication device 100, because transmission is performed between the communication device 100 and the electronic device by using a radio frequency optical signal, the gateway control module 102 of the communication device 100 only needs to provide a data interface for the radio frequency conversion module 103. The gateway control module 102 may provide more data processing capabilities for the communication device 100. In this way, the communication device 100 can implement more data processing operations via the gateway control module 102, and does not need to rely on components such as an FPGA to perform an operation like data format conversion as an existing primary optical network terminal. Therefore, the communication device 100 can save components such as the FPGA. Because components such as the FPGA does not need to be used for data processing, a transmission delay generated by using a signal at the communication device 100 is reduced, and power consumption of the communication device 100 is also reduced. In addition, for the electronic device 200, because the electronic device 200 receives a radio frequency optical signal, the electronic device 200 does not need to perform conversion between a digital optical signal and a digital electrical signal, and does not need to perform conversion between communication protocols. The electronic device 200 only needs to convert the received radio frequency optical signal into a corresponding radio frequency electrical signal, and then, performs filtering and amplification processing to transmit a radio frequency electrical signal. Therefore, compared with an existing secondary optical modem, the electronic device 200 provided in this application has a simpler structure, and needs to perform fewer signal processing operations. In this case, a transmission delay generated by a signal at the electronic device 200 is shorter, and power consumption of the electronic device 200 is lower. In addition, because a communication device 200 is directly connected to each electronic device instead of being indirectly connected via a splitter, uplink concurrency of a plurality of electronic devices is supported. In this way, an uplink waiting delay of each electronic device 200 can be avoided, thereby further reducing the delay generated by the signal at the electronic device. Therefore, the optical communication network 300 including the communication device 100 and the M electronic devices has low power consumption and a low delay. Therefore, the optical communication network 300 provided in this application is applied to an FTTR solution, so that applicability and practicability of the FTTR solution can be improved.

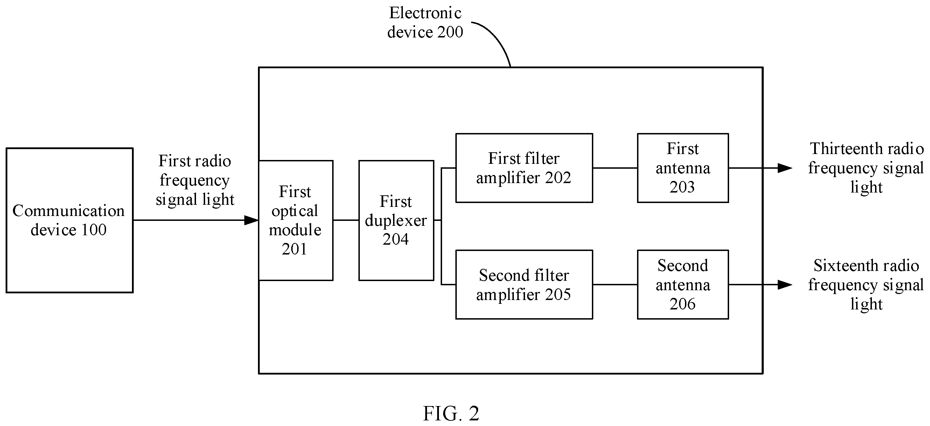

In some optional implementations, FIG. 2 is a diagram of a structure of an electronic device according to this application. As shown in FIG. 2, the electronic device 200 may further include a first duplexer 204, a second filter amplifier 205, and a second antenna 206. The first duplexer 204 is separately connected to the first optical module 201, the first filter amplifier 202, and the second filter amplifier 205, and the second filter amplifier 205 is further connected to the second antenna 206.

In actual operation, the first optical module 201 may send, to the first duplexer 204, the twelfth radio frequency electrical signal obtained by the first optical module 201 through conversion. The first duplexer 204 may be configured to: decompose the twelfth radio frequency electrical signal into a fourteenth radio frequency electrical signal and a fifteenth radio frequency electrical signal, send the fourteenth radio frequency electrical signal to the first filter amplifier 202, and send the fifteenth radio frequency electrical signal to the second filter amplifier 205. The fourteenth radio frequency electrical signal and the fifteenth radio frequency electrical signal correspond to different frequency bands. It should be understood that the duplexer provided in this application is mainly configured to decompose radio frequency electrical signals based on different frequency bands (namely, frequency ranges), or combine radio frequency electrical signals of different frequency bands to form one radio frequency electrical signal. A frequency band that can be decomposed or combined by the duplexer is determined by a performance indicator of the duplexer. This is not specifically limited in this application. For example, it is assumed that frequency bands that can be decomposed or combined by the first duplexer 204 are a 2.4 GHz frequency band and a 5.8 GHz frequency band. In this case, the first duplexer 204 may decompose the twelfth radio frequency electrical signal into the fourteenth radio frequency electrical signal located in the 2.4 GHz frequency band and the fifteenth radio frequency electrical signal located in the 5.8 GHz frequency band.

The second filter amplifier 205 is configured to: perform filtering and/or amplification processing on the fifteenth radio frequency electrical signal to obtain a sixteenth radio frequency electrical signal, and send the sixteenth radio frequency electrical signal to the second antenna 206. The second antenna 206 is configured to send the sixteenth radio frequency electrical signal.

It should be understood that, in this case, that the first filter amplifier is configured to perform filtering and amplification based on the twelfth radio frequency electrical signal to obtain the thirteenth radio frequency electrical signal may be understood as that the first filter amplifier 202 is configured to perform filtering and/or amplification processing on the fourteenth radio frequency electrical signal obtained by decomposing the twelfth radio frequency signal, to obtain the thirteenth radio frequency electrical signal.

In the foregoing implementation, by using an advantage of radio frequency optical signal transmission, the electronic device 200 can support a larger downlink transmission bandwidth based on the first duplexer 204 and a multi-antenna design. This helps reduce complexity and costs of the structure of the electronic device 200.

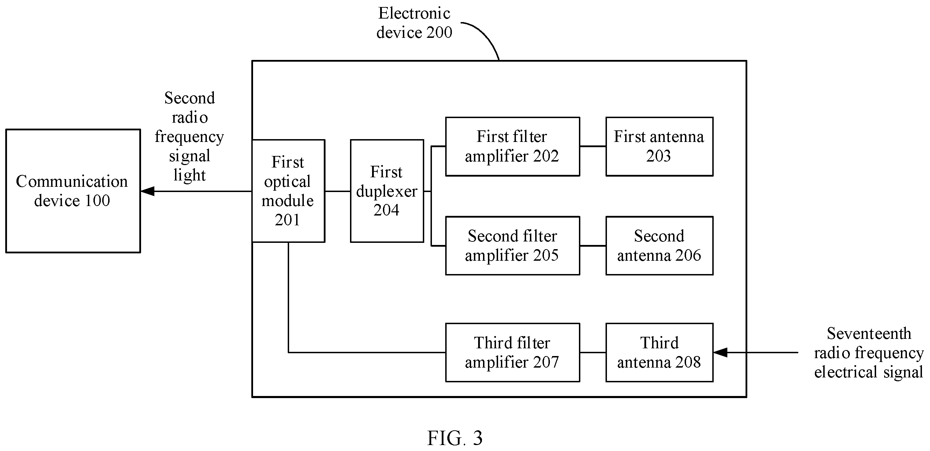

In an optional implementation, FIG. 3 is a diagram of another structure of an electronic device according to this application. As shown in FIG. 3, the electronic device 200 may further include a third filter amplifier 207 and a third antenna 208. The third antenna 208 is connected to the first optical module 201 via the third filter amplifier 207.

In actual operation, the third antenna 208 is configured to: receive a seventeenth radio frequency electrical signal, and send the seventeenth radio frequency electrical signal to the third filter amplifier 207. The third filter amplifier 207 is configured to: perform filtering and/or amplification processing on the seventeenth radio frequency electrical signal to obtain an eighteenth radio frequency electrical signal, and send the eighteenth radio frequency electrical signal to the first optical module 201. The first optical module 201 is further configured to: obtain a second radio frequency optical signal based on the eighteenth radio frequency electrical signal, and send the second radio frequency optical signal to the communication device 100.

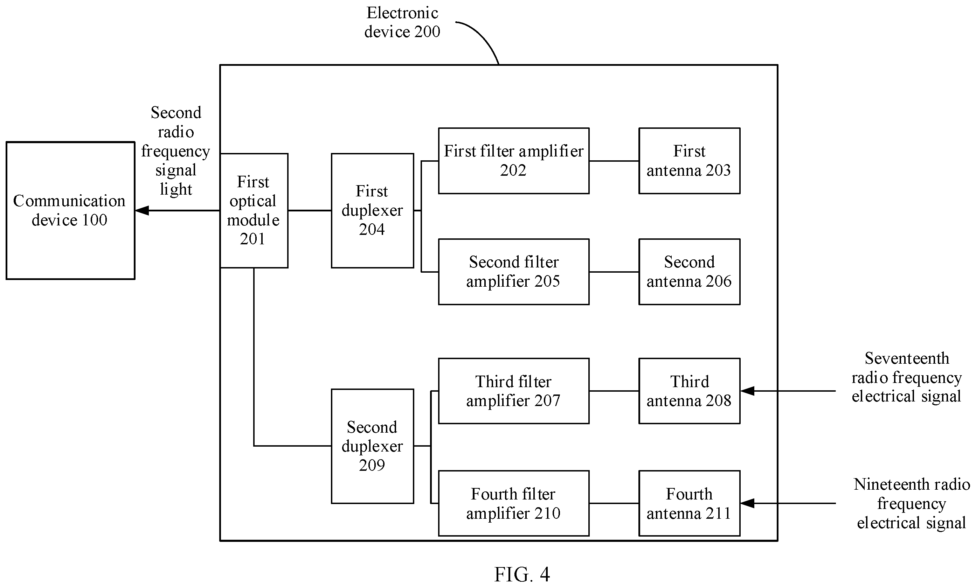

In another optional implementation, FIG. 4 is a diagram of another structure of an electronic device according to this application. As shown in FIG. 4, the electronic device 200 further includes a second duplexer 209, a third filter amplifier 207, a third antenna 208, a fourth filter amplifier 210, and a fourth antenna 211. The second duplexer 209 is separately connected to the first optical module 201, the third filter amplifier 207, and the fourth filter amplifier 210. The third antenna 208 is connected to the third filter amplifier 207, and the fourth antenna 211 is connected to the fourth filter amplifier 210.

In actual operation, the third antenna 208 is configured to: receive a seventeenth radio frequency electrical signal, and send the seventeenth radio frequency electrical signal to the third filter amplifier. The third filter amplifier 207 is configured to: perform filtering and/or amplification processing on the seventeenth radio frequency electrical signal to obtain an eighteenth radio frequency electrical signal, and send the eighteenth radio frequency electrical signal to the second duplexer 209. The fourth antenna 211 is configured to: receive a nineteenth radio frequency electrical signal, and transmit the nineteenth radio frequency electrical signal to the fourth filter amplifier 210. The nineteenth radio frequency electrical signal and the seventeenth radio frequency electrical signal correspond to different frequency bands. The fourth filter amplifier 210 is configured to perform filtering and/or amplification processing on the nineteenth radio frequency electrical signal, to obtain a twentieth radio frequency electrical signal. The second duplexer 209 is configured to: combine the twentieth radio frequency electrical signal and the eighteenth radio frequency electrical signal to obtain a twenty-first radio frequency electrical signal, and send the twenty-first radio frequency electrical signal to the first optical module 201. The first optical module 201 is further configured to: convert the twenty-first radio frequency electrical signal into a second radio frequency optical signal, and send, to the communication device 100, the second radio frequency optical signal obtained by the first optical module 201 through conversion.

In the foregoing implementation, by using the advantage of radio frequency optical signal transmission, the electronic device 200 can support a larger downlink and uplink transmission bandwidth based on the first duplexer 204, the second duplexer 209, and a multi-antenna design. This further helps reduce complexity and costs of the structure of the electronic device 200.

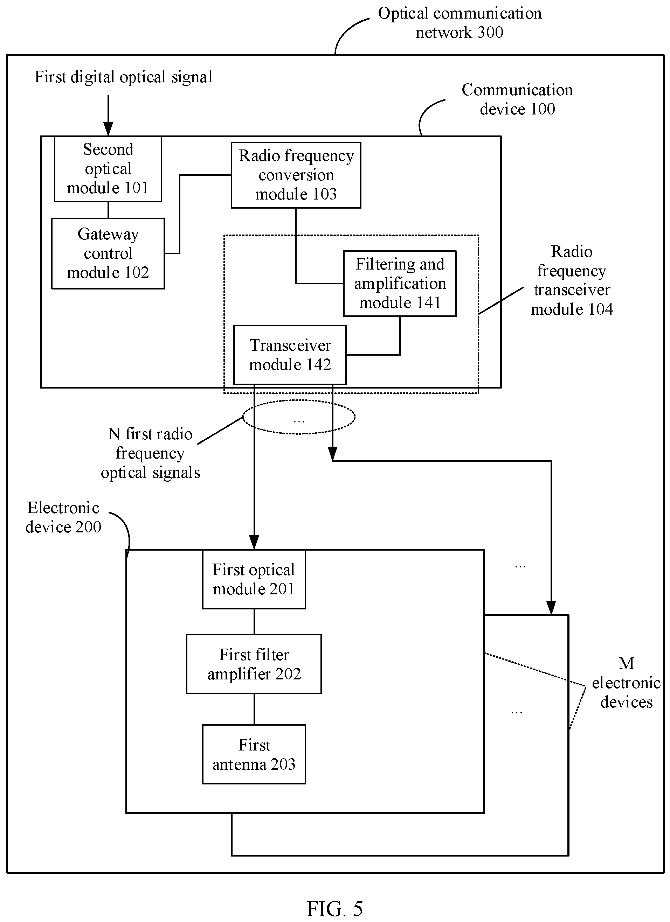

In some feasible implementations, FIG. 5 is a diagram of another structure of a communication device according to this application. As shown in FIG. 5, the radio frequency transceiver module 104 may include a filtering and amplification module 141 and a transceiver module 142. The filtering and amplification module 141 is separately connected to the radio frequency conversion module 103 and the transceiver module 142, and the transceiver module 142 is separately connected to the M electronic devices.

In actual operation, the filtering and amplification module 141 is configured to: perform filtering and/or amplification processing on the first radio frequency electrical signal from the radio frequency conversion module 103 to obtain a second radio frequency electrical signal, and send the second radio frequency electrical signal to the transceiver module 142. The transceiver module 142 is configured to obtain N1 first radio frequency optical signals based on the second radio frequency electrical signal.

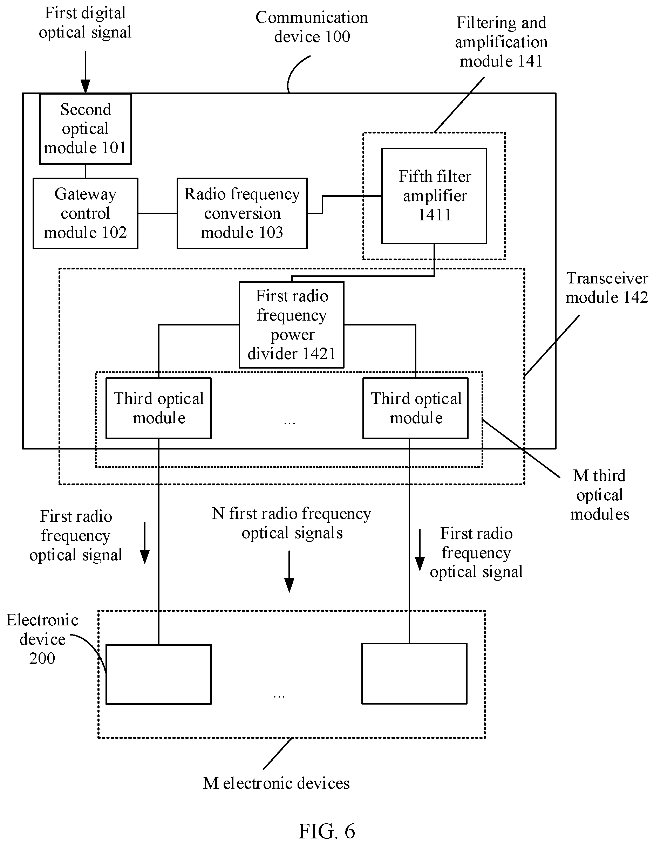

In some feasible implementations, FIG. 6 is a diagram of another structure of a communication device according to this application. As shown in FIG. 6, the filtering and amplification module 141 may include a fifth filter amplifier 1411, and the transceiver module 142 may include a first radio frequency power divider 1421 and M third optical modules. M is a positive integer greater than or equal to 2, and N is equal to M. It may also be understood that, in this implementation, a quantity of third optical modules included in the communication device 100 is the same as a quantity of electronic devices, and the communication device 100 sends one first radio frequency optical signal to each electronic device.

In actual operation, the fifth filter amplifier 1411 is configured to: perform filtering and/or amplification processing on the first radio frequency electrical signal to obtain a second radio frequency electrical signal, and send the second radio frequency electrical signal to the first radio frequency power divider 1421. The first radio frequency power divider 1421 is configured to: split the second radio frequency electrical signal to obtain M third radio frequency electrical signals, and respectively send the M third radio frequency electrical signals to the M third optical modules. It should be understood that one third optical module sends only one third radio frequency electrical signal. It should be further noted that, in this embodiment of this application, the radio frequency power divider is mainly configured to: decompose one input radio frequency electrical signal into a plurality of radio frequency electrical signals based on a specified power ratio, and output the plurality of radio frequency electrical signals; or combine a plurality of input radio frequency electrical signals into one radio frequency electrical signal, and output the radio frequency electrical signal. The first radio frequency power divider 1421 is configured to split a radio frequency electrical signal.

The M third optical modules are configured to: respectively convert the M third radio frequency electrical signals to obtain M first radio frequency optical signals, and respectively send the M first radio frequency optical signals to the M electronic devices. One third optical module is configured to convert one third radio frequency electrical signal into a first radio frequency optical signal, and send, to an electronic device connected to the third optical module, the first radio frequency optical signal obtained by the third optical module through conversion. For example, it is assumed that a target third optical module is connected to the electronic device 200. In this case, after receiving the third radio frequency electrical signal, the target third optical module converts the third radio frequency electrical signal into a first radio frequency optical signal, and sends the first radio frequency optical signal to the electronic device 200, and another third optical module does not send the first radio frequency optical signal to the electronic device 200.

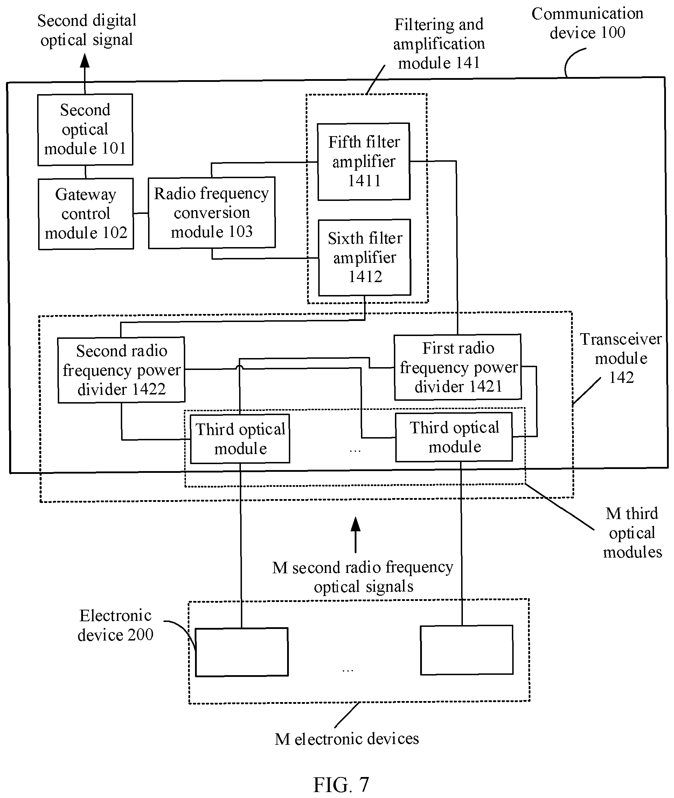

Further, FIG. 7 is a diagram of another structure of a communication device according to this application. As shown in FIG. 7, based on the structure shown in FIG. 6, the filtering and amplification module 141 may further include a sixth filter amplifier 1412. The transceiver module 142 further includes a second radio frequency power divider 1422.

In actual operation, the M third optical modules are further configured to: receive M second radio frequency optical signals, and convert the M second radio frequency optical signals into M fourth radio frequency electrical signals. It should be understood that the M second radio frequency optical signals are respectively from the M electronic devices. The second radio frequency power divider 1422 is configured to: combine the M fourth radio frequency electrical signals into one fifth radio frequency electrical signal, and send the fifth radio frequency electrical signal to the sixth filter amplifier 1412. The sixth filter amplifier 1412 is configured to: perform filtering and/or amplification processing on the fifth radio frequency electrical signal to obtain a sixth radio frequency electrical signal, and send the sixth radio frequency electrical signal to the radio frequency conversion module 103. The radio frequency conversion module 103 is further configured to convert the sixth radio frequency electrical signal into a third digital signal, and send the third digital signal to the gateway control module 102. The gateway control module 102 is configured to convert the third digital signal into a fourth digital signal, and send the fourth digital signal to the second optical module 101. The third digital electrical signal and the second digital electrical signal correspond to a same communication protocol, and the first digital electrical signal and the fourth digital electrical signal correspond to a same communication protocol. The second optical module 101 is further configured to: convert the fourth digital electrical signal into a second digital optical signal, and send the second digital optical signal.

In the foregoing implementation, the radio frequency electrical signals are combined and split via the two radio frequency power dividers. In this way, a quantity of channels of the radio frequency conversion module 103 can be reduced, thereby reducing costs of the communication device 100.

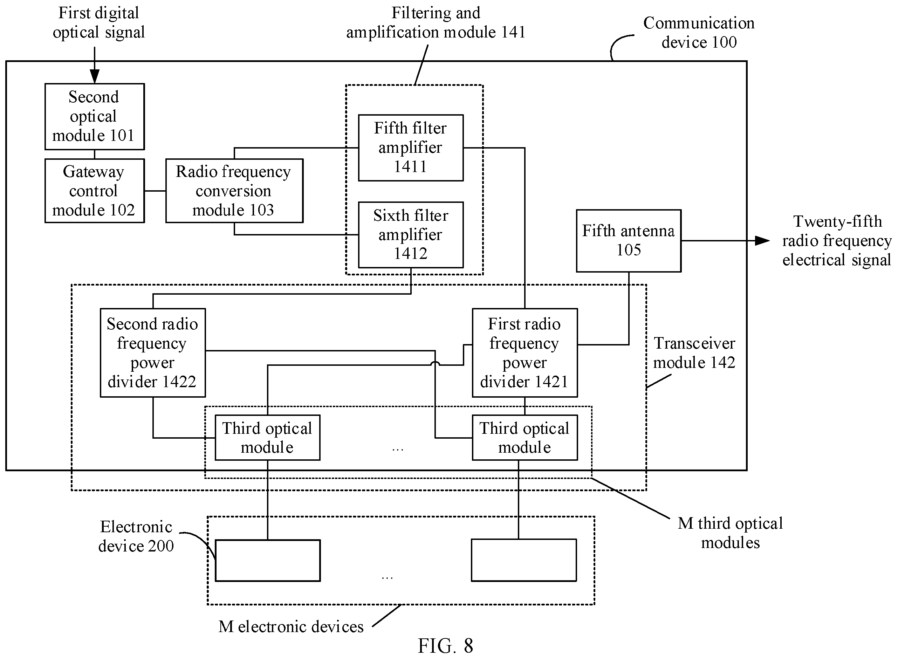

In an optional implementation, FIG. 8 is a diagram of another structure of a communication device according to this application. As shown in FIG. 8, the communication device 100 may further include a fifth antenna 105. The fifth antenna 105 is connected to the first radio frequency power divider 1421. In actual operation, the first radio frequency power divider 1421 may split the second radio frequency electrical signal to obtain M third radio frequency electrical signals and one twenty-fifth radio frequency electrical signal, respectively send the M third radio frequency electrical signals to the M third optical modules, and send the twenty-fifth radio frequency electrical signal to the fifth antenna 105. The fifth antenna 105 may send the twenty-fifth radio frequency electrical signal.

In the foregoing implementation, the fifth antenna 105 is disposed in the communication device 100, so that the communication device 100 can further have a radio frequency electrical signal transmission function, and applicability of the communication device 100 can be improved.

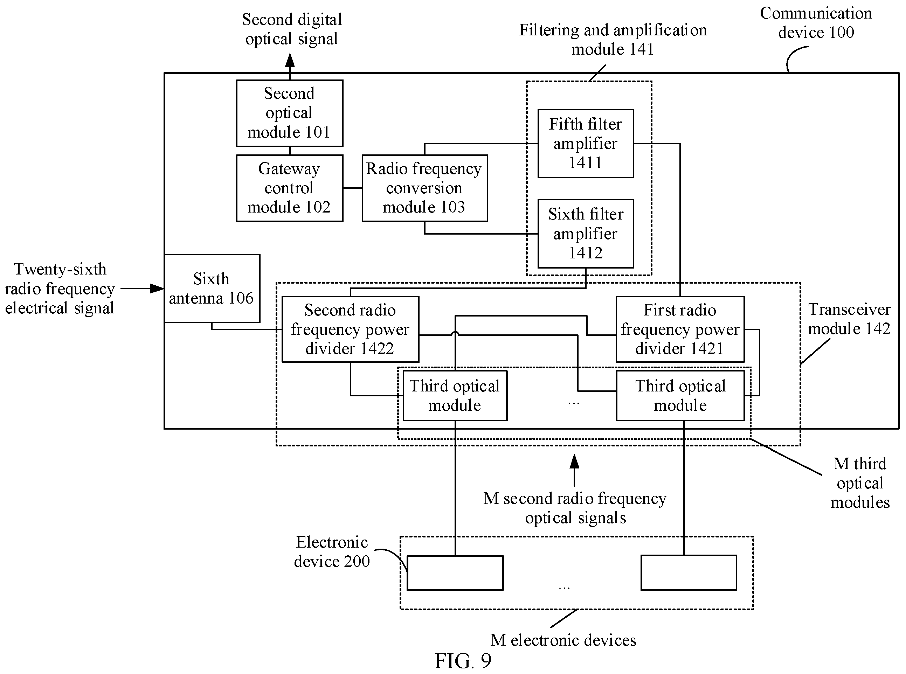

In another optional implementation, FIG. 9 is a diagram of another structure of a communication device according to this application. As shown in FIG. 8, the communication device 100 may further include a sixth antenna 106. The sixth antenna 106 is connected to the second radio frequency power divider 1422. In actual operation, the sixth antenna 106 may receive a twenty-sixth radio frequency electrical signal, and transmit the twenty-sixth radio frequency electrical signal to the second radio frequency power divider 1422. The second radio frequency power divider 1422 may be configured to: combine the M fourth radio frequency electrical signals and the twenty-sixth radio frequency electrical signal into one fifth radio frequency electrical signal, and send the fifth radio frequency electrical signal to the sixth filter amplifier 1412.

In the foregoing implementation, the sixth antenna 106 is disposed in the communication device 100, so that the communication device 100 can further have a radio frequency electrical signal receiving function, and applicability of the communication device 100 can also be improved.

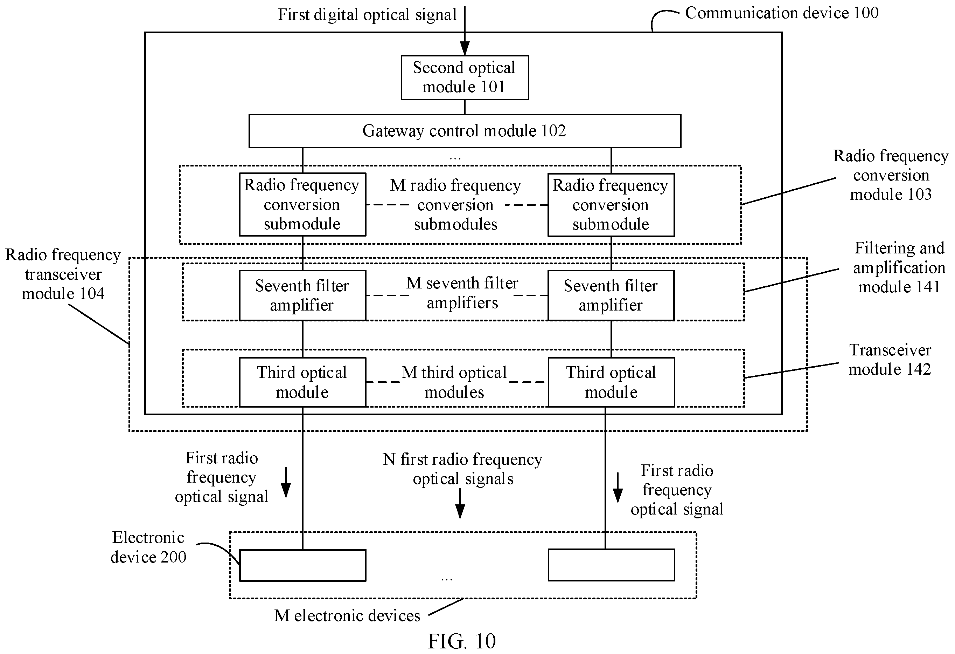

In some feasible implementations, FIG. 10 is a diagram of another structure of a communication device according to this application. As shown in FIG. 10, the radio frequency transceiver module 104 may include a filtering and amplification module 141 and a transceiver module 142. The radio frequency conversion module 103 may include M radio frequency conversion submodules, the filtering and amplification module 141 may include M seventh filter amplifiers, and the transceiver module 142 may include M third optical modules. The M radio frequency conversion submodules are respectively connected to the M third optical modules via M seventh filter amplifiers. M is a positive integer greater than or equal to 2. It should be understood that one radio frequency conversion submodule is connected to one third optical module via only one seventh filter amplifier. The M radio frequency conversion submodules are separately connected to the gateway control module 102.

It should be noted that, in the structure shown in FIG. 10, there is a unique channel between each radio frequency conversion submodule and each electronic device. Therefore, the communication device 100 may independently communicate with each of the M electronic devices. In this case, a quantity of first radio frequency optical signals sent by the communication device 100 does not need to be consistent with the quantity M of electronic devices. In other words, the communication device 100 may send one first radio frequency optical signal to one of the M electronic devices, or may send one first radio frequency optical signal to each of the M electronic devices. In this architecture, a communication process between the communication device 100 and each electronic device is similar. To avoid repetition, the following uses the electronic device 200 as an example for description.

Herein, it is assumed that the gateway control module 102 establishes a communication connection to the electronic device 200 via a target radio frequency conversion submodule in the M radio frequency conversion submodules, a target seventh filter amplifier in the M seventh filter amplifiers, and a target third optical module in the M third optical modules. In actual operation, the gateway control module 102 may send the second digital electrical signal to the target radio frequency conversion submodule. The target radio frequency conversion submodule may be configured to: convert the second digital electrical signal into a first radio frequency electrical signal, and send the first radio frequency electrical signal to the target seventh filter amplifier. The target seventh filter amplifier may be configured to: perform filtering and/or amplification processing on the first radio frequency electrical signal to obtain a second radio frequency electrical signal, and send the second radio frequency electrical signal to the target third optical module. The target third optical module is configured to: obtain a first radio frequency optical signal based on the second radio frequency electrical signal, and send the first radio frequency optical signal to the electronic device 200.

In the foregoing implementation, the communication device 100 uses such an architecture, so that each electronic device has an independent channel. In this way, a channel capacity between the communication device 100 and the electronic device can be improved.

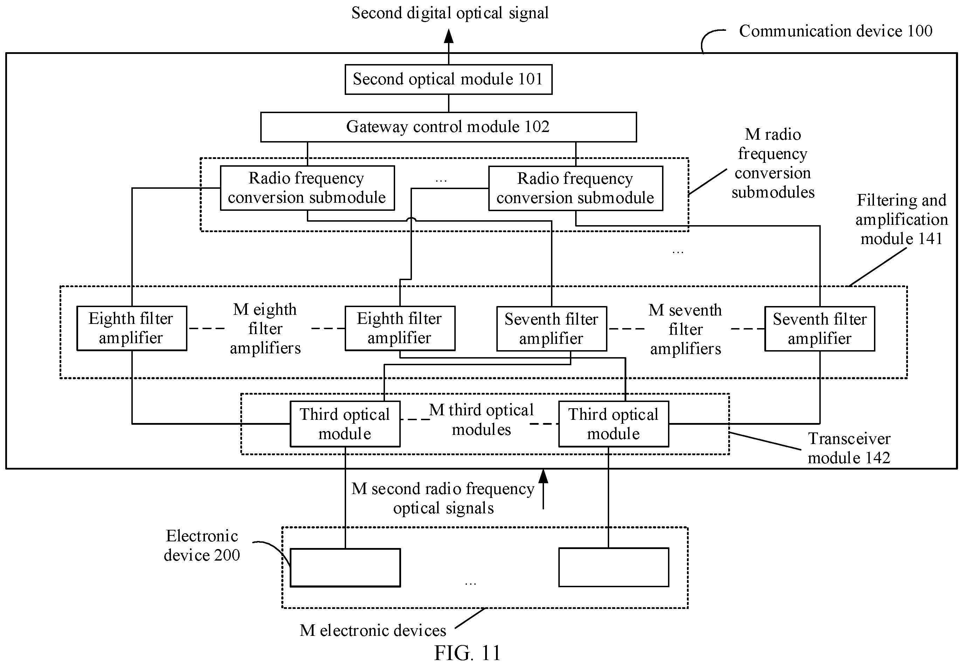

Optionally, FIG. 11 is a diagram of another structure of a communication device according to this application. As shown in FIG. 11, the filtering and amplification module 141 further includes M eighth filter amplifiers, and the M radio frequency conversion submodules are further respectively connected to M third optical modules via the M eighth filter amplifiers.

In actual operation, the M third optical modules are further configured to receive M second radio frequency optical signals, and convert the M second radio frequency optical signals into M third radio frequency electrical signals. The M eighth filter amplifiers are further configured to respectively perform filtering and/or amplification processing on the M third radio frequency electrical signals to obtain M fourth radio frequency electrical signals. The M radio frequency conversion submodules are further configured to convert the M fourth radio frequency electrical signals into M third digital electrical signals. The gateway control module 102 is further configured to obtain a fourth digital electrical signal based on the M third digital electrical signals. The third digital electrical signal and the second digital electrical signal correspond to a same communication protocol, and the first digital electrical signal and the fourth digital electrical signal correspond to a same communication protocol. The second optical module 101 is further configured to: convert the fourth digital electrical signal into a second digital optical signal, and send the second digital optical signal.

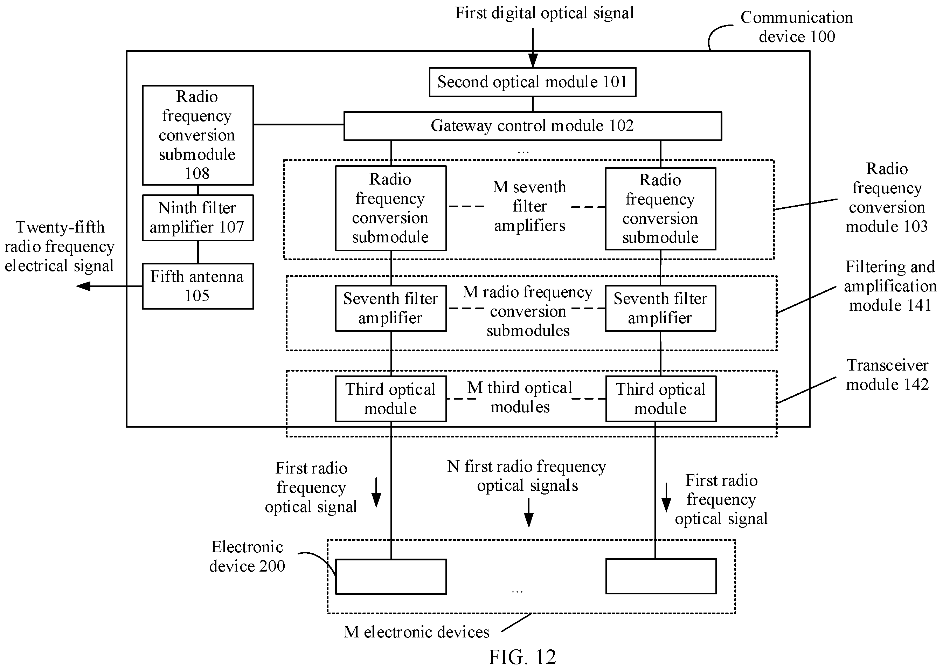

Optionally, FIG. 12 is a diagram of another structure of a communication device according to this application. As shown in FIG. 12, the communication device 100 may further include a fifth antenna 105, a ninth filter amplifier 107, and a radio frequency conversion submodule 108. The ninth filter amplifier 107 is connected to the gateway control module 102 via the radio frequency conversion submodule 108. The fifth antenna 105 is connected to the ninth filter amplifier 107.

In actual operation, the gateway control module 102 may send the second digital electrical signal to the radio frequency conversion submodule 108. The radio frequency conversion submodule 108 may convert the second digital electrical signal into a twenty-seventh radio frequency electrical signal, and send the twenty-seventh radio frequency electrical signal to the ninth filter amplifier 107. The ninth filter amplifier 107 is configured to perform filtering and/or amplification processing on the twenty-seventh radio frequency electrical signal, to obtain a twenty-fifth radio frequency electrical signal. The fifth antenna 105 is configured to send the twenty-fifth radio frequency electrical signal.

In the foregoing implementation, the fifth antenna 105 is disposed in the communication device 100, so that the communication device 100 can further have a radio frequency electrical signal transmission function, and applicability of the communication device 100 can be improved.

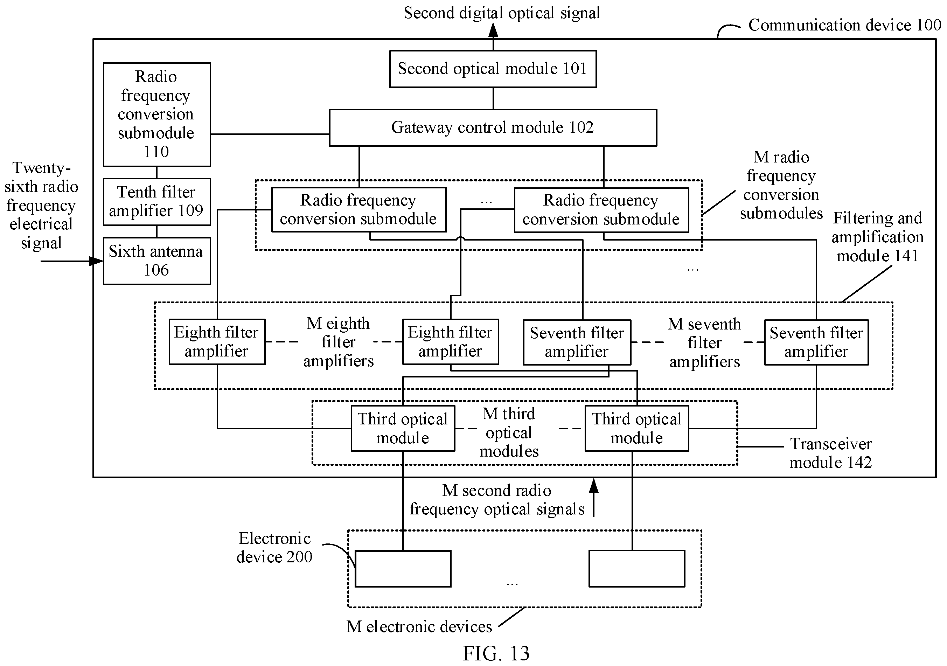

Optionally, FIG. 13 is a diagram of another structure of a communication device according to this application. As shown in FIG. 13, the communication device 100 may further include a sixth antenna 106, a tenth filter amplifier 109, and a radio frequency conversion submodule 110. The tenth filter amplifier 109 is connected to the gateway control module 102 via the radio frequency conversion submodule 110. The sixth antenna 106 is connected to the tenth filter amplifier 109.

In actual operation, the sixth antenna 106 is configured to receive a twenty-sixth radio frequency electrical signal. The tenth filter amplifier 109 is configured to perform filtering and/or amplification processing on the twenty-sixth radio frequency electrical signal, to obtain a processed twenty-sixth radio frequency electrical signal. The radio frequency conversion submodule 110 is configured to: convert the processed twenty-sixth radio frequency electrical signal into a fifth digital electrical signal, and send the fifth digital electrical signal to the gateway control module 102. In this case, the gateway control module 102 is configured to obtain a fourth digital electrical signal based on the fifth digital electrical signal and M third digital electrical signals.

In the foregoing implementation, the sixth antenna 106 is disposed in the communication device 100, so that the communication device 100 can further have a radio frequency electrical signal receiving function, and applicability of the communication device 100 can also be improved.

It should be noted that the first optical module and the third optical module in this application are usually radio frequency optical modules that are packaged by using a BOSA on board (that is, an optical transmitter-receiver assembly on board). Optionally, the first optical module and the third optical module may also be in a BOSA on-board XGPON digital optical module packaging form, but the first optical module and the third optical module should meet a key requirement of a radio frequency optical module, for example, an input/output impedance is 50 ohms, a signal-to-noise ratio at an output radio frequency signal end of a photodetector should meet specific requirements. It should be understood that, in actual implementation, the first optical module and the third optical module each should include one optical interface and at least one electrical interface. The optical interface is characterized by a pigtail-type or pluggable optical fiber port. An electrical signal accessed by the electrical interface should include a combined or split direct current signal and a radio frequency signal, the radio frequency signal in the electrical signal is directly connected to a radio frequency link on the board, and a connection form may be a coaxial connector, pin welding, surface-mount welding, or the like. In addition, after the third optical module on the communication device 100 is connected to the first optical module on the electronic device 200, a frequency response curve supported by the third optical module and the first optical module should be greater than an operating frequency band of the electronic device 200, and flatness between a plurality of frequency bands should meet a specific requirement to support frequency division multiplexing multi-band transmission in a single fiber.

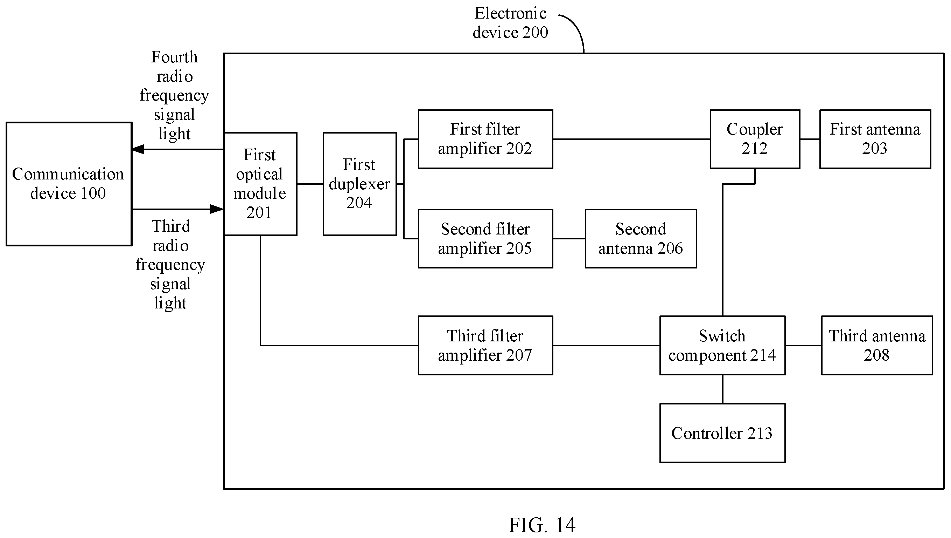

In some feasible implementations, FIG. 14 is a diagram of another structure of an electronic device according to this application. As shown in FIG. 14, the electronic device 200 may further include a controller 213, a coupler 212, and a switch component 214. The first filter amplifier 202 is connected to the first antenna 203 via the coupler 212, the third filter amplifier 207 is connected to the third antenna via the switch component 214, the coupler 212 is connected to the switch component 214, and the switch component 214 is connected to the controller 213.

In actual operation, when it is determined that the communication device 100 normally communicates with the electronic device 200, or when it is determined that closed-loop check does not need to be performed on the electronic device, the controller 213 is configured to control the switch component 214, so that the coupler 212 is disconnected from the third filter amplifier 207 and the third antenna 208 is connected to the third filter amplifier 207. In other words, the switch component 214 is controlled, so that the radio frequency electrical signal received by the third antenna 208 can reach the third filter amplifier 207 through the switch component 214, and the radio frequency electrical signal output by the first filter amplifier 202 cannot reach the third filter amplifier 207 through the coupler 212 and the switch component 214. Correspondingly, when it is determined that closed-loop check is performed on the electronic device 200, the controller 213 is configured to control the switch component 214, so that the coupler 212 is connected to the third filter amplifier 207 and the third antenna 208 is disconnected from the third filter amplifier 207. In other words, the switch component 214 is controlled, so that the radio frequency electrical signal received by the third antenna 208 cannot reach the third filter amplifier 207 through the switch component 214, and the radio frequency electrical signal output by the first filter amplifier 202 can reach the third filter amplifier 207 through the coupler 212 and the switch component 214.

It should be noted that the controller 213 may be a main controller of the electronic device 200, the switch component 214 may be controllable switch components of various forms, and the coupler 212 may be analog couplers of various forms. Specific implementations of the switch component 214 and the coupler 212 are not limited in this application, provided that it is ensured that the switch component 214 and the coupler 212 can implement the foregoing functions.

It should be further noted that, in actual operation, the controller 213 may determine, based on an indication signal received by the controller 213 from the communication device 100, whether to perform closed-loop check on the electronic device 200, or the controller 213 may determine, based on a user control instruction received by the controller 213, whether to perform closed-loop check on the electronic device 200. This is not limited in this application.

In the foregoing implementation, through functions of the coupler 212 and the switch component 214, the electronic device 200 can implement the closed-loop check by reusing the uplink and downlink channels of the electronic device. In this way, the electronic device 200 does not need to introduce an independent calibration channel to implement the closed-loop check, thereby reducing complexity and costs of the structure of the electronic device.

Optionally, when the communication device 100 uses the structures shown in FIG. 6 to FIG. 9, after it is determined that closed-loop check is performed on all the M electronic devices, the controllers in the M electronic devices need to control the switch component to form a check loop.

Further, the radio frequency conversion module 103 is further configured to generate a seventh radio frequency electrical signal. The fifth filter amplifier 1411 is further configured to perform filtering and/or amplification processing on the seventh radio frequency electrical signal to obtain an eighth radio frequency electrical signal. The first radio frequency power divider 1421 is further configured to split the eighth radio frequency electrical signal to obtain M ninth radio frequency electrical signals. The M third optical modules are further configured to: respectively convert the M ninth radio frequency electrical signals to obtain M third radio frequency optical signals, and respectively send the M third radio frequency optical signals to the M electronic devices.

Further, each of the M electronic devices feeds back one fourth radio frequency optical signal based on the received third radio frequency optical signal. The following uses the electronic device 200 as an example for description. Specifically, the first optical module 201 is configured to convert the received third radio frequency optical signal into a twenty-second radio frequency electrical signal. The first filter amplifier 202 is configured to perform filtering and/or amplification processing on the twenty-second radio frequency electrical signal, to obtain a twenty-third radio frequency electrical signal. The coupler 212 is configured to transmit the twenty-third radio frequency electrical signal to the switch component 214. The switch component 214 is configured to transmit the twenty-third radio frequency electrical signal to the third filter amplifier 207. The third filter amplifier 207 is configured to perform filtering and/or amplification processing on the twenty-third radio frequency electrical signal, to obtain a twenty-fourth radio frequency electrical signal. The first optical module 201 is further configured to convert the twenty-fourth radio frequency electrical signal into a fourth radio frequency optical signal, and send the fourth radio frequency optical signal to the communication device 100. Each of the M electronic devices performs the foregoing operations, so that the M fourth radio frequency optical signals can be sent to the communication device 100. It should be understood that the M fourth radio frequency optical signals are feedback signals of the M third radio frequency optical signals.

Further, the M third optical modules are further configured to: receive M fourth radio frequency optical signals, and convert the N fourth radio frequency optical signals into N tenth radio frequency electrical signals. The second radio frequency power divider 1422 is further configured to combine the N tenth radio frequency electrical signals into an eleventh radio frequency electrical signal. The sixth filter amplifier 1412 is configured to perform filtering and/or amplification processing on the eleventh radio frequency electrical signal, to obtain a twelfth radio frequency electrical signal. The radio frequency conversion module 103 is further configured to perform power calibration and/or delay calibration on the M electronic devices based on the seventh radio frequency electrical signal and the twelfth radio frequency electrical signal.

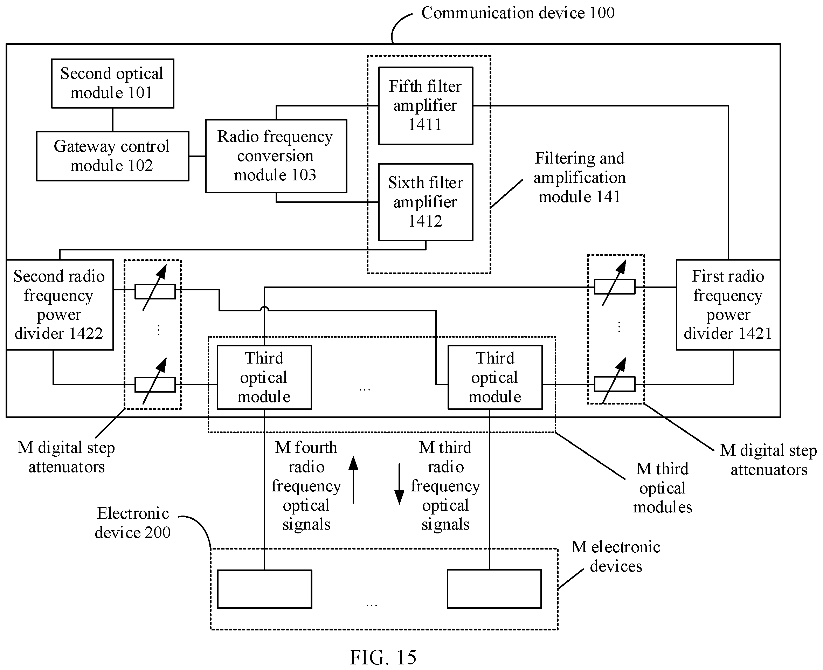

Optionally, FIG. 15 is a diagram of another structure of a communication device according to this application. As shown in FIG. 15, the communication device 100 may further include 2*M digital step attenuators. The first radio frequency power divider 1421 is respectively connected to the M third optical modules via M digital step attenuators of the 2*M digital step attenuators. The second radio frequency power divider 1422 is respectively connected to the M third optical modules via remaining M digital step attenuators.

In actual implementation, the radio frequency conversion module 103 may be configured to determine, based on a difference between signal parameters such as power and frequency of the seventh radio frequency electrical signal and the twelfth radio frequency electrical signal, whether to perform power calibration compensation or delay calibration compensation on each electronic device. Generally, power calibration compensation is implemented by the foregoing 2*M digital step attenuators, and delay calibration compensation may be implemented by the radio frequency conversion module 103.

Optionally, when the communication device 100 uses the structure shown in FIG. 10, the communication device 100 may simultaneously perform closed-loop calibration on the M electronic devices, or may separately perform closed-loop calibration on each electronic device. Because specific closed-loop calibration processes are the same, the following still uses performing closed-loop calibration on the electronic device 200 as an example.

Specifically, after it is determined that closed-loop check is performed on the electronic device 200, the controller 213 in the electronic device 200 needs to control the switch component 214 to form a check loop.

Further, the target radio frequency conversion submodule may generate a fifth radio frequency electrical signal. The target seventh filter amplifier is further configured to perform filtering and/or amplification processing on the fifth radio frequency electrical signal to obtain a sixth radio frequency electrical signal. The target third optical module is further configured to: convert the sixth radio frequency electrical signal into a third radio frequency optical signal, and send the third radio frequency optical signal to the electronic device 200.

The first optical module 201 is configured to convert a received third radio frequency optical signal into a twenty-second radio frequency electrical signal. The first filter amplifier 202 is configured to perform filtering and/or amplification processing on the twenty-second radio frequency electrical signal, to obtain a twenty-third radio frequency electrical signal. The coupler 212 is configured to transmit the twenty-third radio frequency electrical signal to the switch component 214. The switch component 214 is configured to transmit the twenty-third radio frequency electrical signal to the third filter amplifier 207. The third filter amplifier 207 is configured to perform filtering and/or amplification processing on the twenty-third radio frequency electrical signal, to obtain a twenty-fourth radio frequency electrical signal. The first optical module 201 is further configured to convert the twenty-fourth radio frequency electrical signal into a fourth radio frequency optical signal, and send the fourth radio frequency optical signal to the communication device 100.

Further, the target third optical module is further configured to: receive the fourth radio frequency optical signal, and convert the fourth radio frequency optical signal into a seventh radio frequency electrical signal. Herein, the fourth radio frequency optical signal is a feedback signal of the third radio frequency optical signal. The target seventh filter amplifier is further configured to perform filtering and/or amplification processing on the seventh radio frequency electrical signal, to obtain an eighth radio frequency electrical signal. The target radio frequency conversion submodule is further configured to perform power calibration and/or delay calibration based on the eighth radio frequency electrical signal and the fifth radio frequency electrical signal.

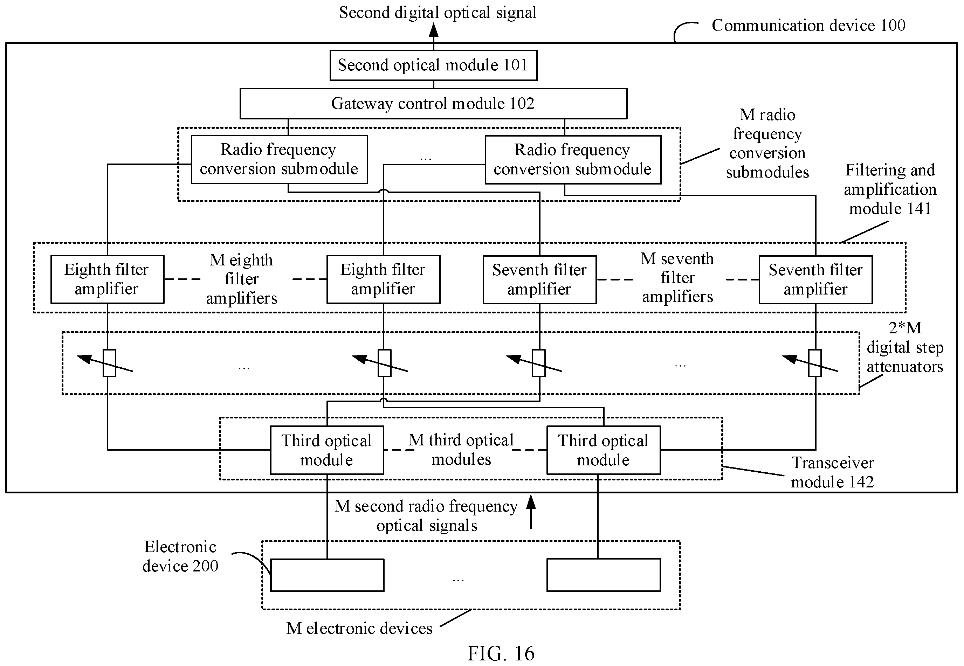

Further, FIG. 16 is a diagram of another structure of a communication device according to this application. As shown in FIG. 16, the communication device 100 may further include 2*M digital step attenuators. The M seventh filter amplifiers are respectively connected to the M third optical modules via M digital step attenuators. The M eighth filter amplifiers are also respectively connected to the M third optical modules via the M digital step attenuators.

In specific implementation, the target radio frequency conversion submodule may be configured to determine, based on a difference between signal parameters such as power and frequency of the eighth radio frequency electrical signal and the fifth radio frequency electrical signal, whether to perform power calibration compensation or delay calibration compensation on the electronic device 200. Generally, power calibration compensation is implemented by the foregoing 2*M digital step attenuators, and delay calibration compensation may be implemented by the target radio frequency conversion submodule.

It should be noted that the radio frequency conversion module or the radio frequency conversion submodule in embodiments of this application is usually a device or an apparatus that has a function of converting a digital electrical signal into a radio frequency electrical signal, a data processing function, and a control function. Optionally, the radio frequency conversion module or the radio frequency conversion submodule may be a single-channel or multi-communication Wi-Fi control chip. The gateway control module in embodiments of this application is usually a component or an apparatus that has a communication protocol conversion function and a control function. Optionally, the gateway control module may be a gateway control chip. The filter amplifier in embodiments of this application is usually a functional component that can filter and amplify a radio frequency electrical signal. An implementation of the filter amplifier is not specifically limited in this application.

It should be noted that the connection in this embodiment of this application may be an electrical connection or an optical connection, and is determined by a connection requirement of a specific component. Herein, the electrical connection may be specifically a connection established through a printed circuit board (printed circuit board, PCB) trace, or may be a connection established through metal bonding between different chips or integrated modules, or may be a connection established through a trace inside a packaged chip. This is not specifically limited herein. An optical connection is a connection established by using optical fibers and optical waveguides of various specifications. The optical interface in embodiments of this application may be fiber to fiber couplers of various specifications, fiber to waveguide coupling structures of various specifications, or the like. This is not specifically limited herein. The modules described in this application may be a set of components installed on a same substrate medium, or may be a combination of discrete devices. This is not specifically limited herein.

It should be noted that the communication device 100 in this application may be a device or an apparatus that has functions of receiving and sending a digital optical signal, functions of receiving and sending a radio frequency optical signal, functions of receiving and sending a radio frequency electrical signal, a function of processing a digital electrical signal, and a function of processing a radio frequency electrical signal. An implementation of the communication device 100 is not specifically limited in this application. The electronic device 200 in this application may be a device or an apparatus that has functions of receiving and sending a radio frequency optical signal, functions of receiving and sending a radio frequency electrical signal, and a function of processing a radio frequency electrical signal. An implementation of the electronic device 200 is not specifically limited in this application. It should be understood that, when the optical communication network 300 provided in this application is applied to the FTTR solution, the communication device 100 may be used as a primary optical modem device, and the electronic device 200 may be used as a secondary optical modem device.

This application further provides a communication device. For a structure and a function of the communication device, refer to the descriptions of the structure and the function of the communication device 100 in the foregoing embodiment. Details are not described herein again.

This application further provides an electronic device. For a structure and a function of the electronic device, refer to the descriptions of the structure and the function of the electronic device 200 in the foregoing embodiment. Details are not described herein again.

### Embodiment 2

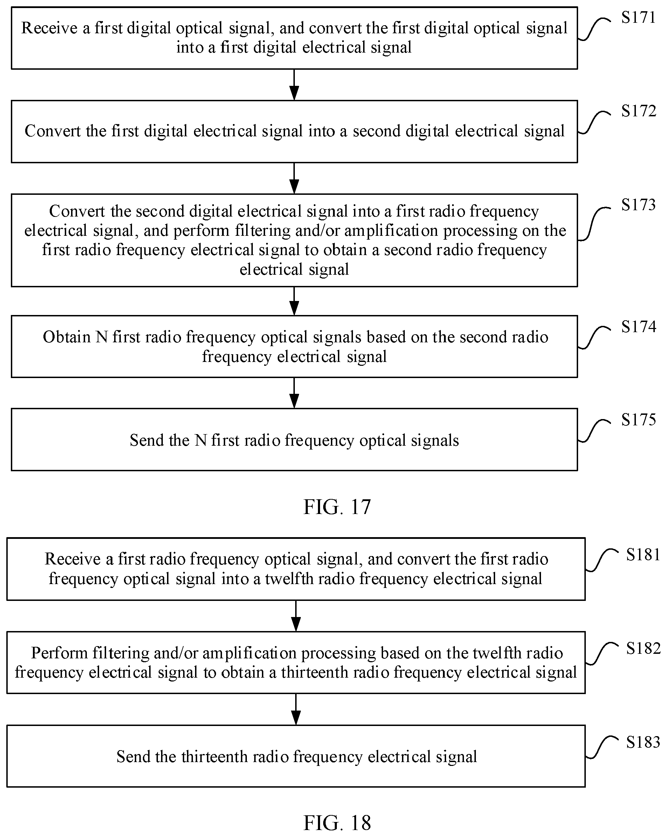

FIG. 17 is a schematic flowchart of a communication method according to this application. The communication method is applicable to the communication device 100 described in Embodiment 1. As shown in FIG. 17, the method includes the following steps.

S171: The communication device 100 receives a first digital optical signal, and converts the first digital optical signal into a first digital electrical signal.

In some feasible implementations, the communication device 100 may receive the first digital optical signal. It should be noted that the first digital optical signal may come from another device or apparatus that establishes an optical connection to the communication device 100. For example, the first digital optical signal may come from an OLT optically connected to the communication device 100. Further, the communication device 100 may convert the first digital optical signal into the first digital electrical signal. Herein, for a specific process in which the communication device 100 converts the first digital optical signal into the first digital electrical signal, refer to the process in which the communication device 100 converts the first digital optical signal into the first digital electrical signal described in Embodiment 1. Details are not described herein again.

S172: The communication device 100 converts the first digital electrical signal into a second digital electrical signal.

In some feasible implementations, the communication device 100 may convert the first digital electrical signal obtained through conversion into the second digital electrical signal. The first digital electrical signal and the second digital electrical signal correspond to different communication protocols. For example, the first digital electrical signal may meet a PON protocol, and the second digital electrical signal may meet a Wi-Fi communication protocol for transmission. Herein, for a specific process in which the communication device 100 converts the first digital electrical signal into the second digital electrical signal, refer to corresponding descriptions in Embodiment 1. Details are not described herein again.

S173: The communication device 100 converts the second digital electrical signal into a first radio frequency electrical signal, and performs filtering and/or amplification processing on the first radio frequency electrical signal, to obtain a second radio frequency electrical signal.

In some feasible implementations, after receiving the second digital electrical signal, the communication device 100 may first convert the second digital electrical signal into the first radio frequency electrical signal. Optionally, the communication device 100 may convert the second digital electrical signal into the first radio frequency electrical signal in a digital-to-analog conversion manner. Further, the communication device 100 may perform filtering and/or amplification processing on the first radio frequency electrical signal, to obtain the second radio frequency electrical signal.

S174: The communication device 100 obtains N first radio frequency optical signals based on the second radio frequency electrical signals.

In some feasible implementations, after obtaining the second radio frequency electrical signals, the communication device 100 may obtain the N first radio frequency electrical signals based on the second radio frequency electrical signal.

In an optional implementation, when the communication device 100 uses the structures shown in FIG. 5 to FIG. 9, a quantity N of first radio frequency optical signals should be the same as a quantity of electronic devices, that is, N is equal to M. In this case, the communication device 100 may obtain M first radio frequency electrical signals based on the second radio frequency electrical signal.

Specifically, the communication device 100 may first obtain M third radio frequency electrical signals through splitting based on the second radio frequency electrical signal, and then perform optical-electro conversion on each of the M third radio frequency electrical signals to obtain the M first radio frequency optical signals.

In another optional implementation, when the communication device 100 uses the structures shown in FIG. 10 to FIG. 13, a quantity N of first radio frequency optical signals may be less than or equal to a quantity M of electronic devices. Optionally, if N is equal to 1, that is, the communication device 100 sends only one first radio frequency signal to the electronic device 200, after obtaining the second radio frequency electrical signal, the communication device may directly convert the second radio frequency electrical signal into one first radio frequency optical signal. If N is greater than 1, the communication device may perform N times of conversion on the second radio frequency electrical signal, to obtain the N first radio frequency optical signals.

S175: The communication device 100 sends the N first radio frequency optical signals.

In some feasible implementations, after obtaining the N first radio frequency optical signals, the communication device may respectively send the N first radio frequency optical signals to the N electronic devices in the M electronic devices.

In an optional implementation, when the communication device 100 uses the structures shown in FIG. 5 to FIG. 9, a quantity N of first radio frequency optical signals should be the same as a quantity of electronic devices. Therefore, the communication device 100 may send one radio frequency optical signal to each of the M electronic devices.

In another optional implementation, when the communication device 100 uses the structures shown in FIG. 10 to FIG. 13, a quantity N of first radio frequency optical signals should be the same as a quantity of electronic devices. Therefore, the communication device 100 may send one radio frequency optical signal to each of the M electronic devices.

In some feasible implementations, when the communication device 100 uses the structures shown in FIG. 5 to FIG. 9, the communication device 100 may further receive N second radio frequency optical signals, convert the N second radio frequency optical signals into N fourth radio frequency electrical signals, and combine the N fourth radio frequency electrical signals into a fifth radio frequency electrical signal. Then, the communication device 100 may perform filtering and/or amplification processing on the fifth radio frequency electrical signal to obtain a sixth radio frequency electrical signal, and convert the sixth radio frequency electrical signal into a third digital signal. Then, the communication device 100 may further convert the third digital signal into a fourth digital signal. The third digital electrical signal and the second digital electrical signal correspond to a same communication protocol. The first digital electrical signal and the fourth digital electrical signal correspond to a same communication protocol. Then, the communication device 100 may convert the fourth digital electrical signal into a second digital optical signal, and send the second digital optical signal. It should be understood that a receiver of the second digital optical signal may alternatively be another device or apparatus that establishes an optical connection to the communication device 100. Herein, for a specific process in which the communication device 100 performs the foregoing steps, refer to corresponding descriptions in Embodiment 1. Details are not described herein again.

Optionally, when it is determined that closed-loop check is performed on the M electronic devices, the communication device 100 may generate a seventh radio frequency electrical signal, and perform filtering and/or amplification processing on the seventh radio frequency electrical signal, to obtain an eighth radio frequency electrical signal. Then, the communication device 100 may split the eighth radio frequency electrical signal to obtain N ninth radio frequency electrical signals, and respectively convert the N ninth radio frequency electrical signals to obtain N third radio frequency optical signals. It should be understood that, in this case, N is equal to M. Then, the communication device 100 may separately send the N third radio frequency optical signals to the M electronic devices. Herein, for a specific process in which the communication device 100 performs the foregoing steps, refer to corresponding descriptions in Embodiment 1. Details are not described herein again.

Further, the communication device 100 may receive N fourth radio frequency optical signals sent by the M electronic devices. The N fourth radio frequency optical signals are feedback signals of the N third radio frequency optical signals. Then, the communication device 100 converts the N fourth radio frequency optical signals into N tenth radio frequency electrical signals, and combines the N tenth radio frequency electrical signals into an eleventh radio frequency electrical signal. Then, the communication device 100 performs filtering and/or amplification processing on the eleventh radio frequency electrical signal to obtain a twelfth radio frequency electrical signal, and performs power calibration and/or delay calibration based on the seventh radio frequency electrical signal and the twelfth radio frequency electrical signal. Herein, for a specific process in which the communication device 100 performs the foregoing steps, refer to corresponding descriptions in Embodiment 1. Details are not described herein again.

Optionally, when the communication device 100 uses the structure shown in FIG. 16, the communication device 100 may determine, based on a difference between signal parameters such as power and frequency of the seventh radio frequency electrical signal and the twelfth radio frequency electrical signal, whether to perform power calibration compensation or delay calibration compensation on each electronic device. In addition, power calibration compensation is implemented by the foregoing 2*M digital step attenuators, and delay calibration compensation may be implemented by the radio frequency conversion module 103 included in the communication device 100.

In some feasible implementations, when the communication device 100 uses the structures shown in FIG. 5 to FIG. 9, the communication device 100 may further split the second radio frequency electrical signal to obtain a twenty-fifth radio frequency electrical signal, and send the twenty-fifth radio frequency electrical signal.

In some feasible implementations, when the communication device 100 uses the structures shown in FIG. 5 to FIG. 9, the communication device 100 may further receive a twenty-sixth radio frequency electrical signal. Herein, the twenty-sixth radio frequency electrical signal is received by a sixth antenna 107 built in the communication device 100. Then, the communication device 100 combines the twenty-sixth radio frequency electrical signal and the M fourth radio frequency electrical signals received from the M electronic devices into one fifth radio frequency electrical signal. Then, the communication device 100 may perform filtering and/or amplification processing on the fifth radio frequency electrical signal to obtain a sixth radio frequency electrical signal, and convert the sixth radio frequency electrical signal into a third digital signal. Then, the communication device 100 may further convert the third digital signal into a fourth digital signal. The third digital electrical signal and the second digital electrical signal correspond to a same communication protocol. The first digital electrical signal and the fourth digital electrical signal correspond to a same communication protocol. Then, the communication device 100 may convert the fourth digital electrical signal into a second digital optical signal, and send the second digital optical signal. It should be understood that a receiver of the second digital optical signal may alternatively be another device or apparatus that establishes an optical connection to the communication device 100. Herein, for a specific process in which the communication device 100 performs the foregoing steps, refer to corresponding descriptions in Embodiment 1. Details are not described herein again.

In some feasible implementations, when the communication device 100 uses the structures shown in FIG. 10 to FIG. 13, the communication device 100 may further receive M second radio frequency optical signals. M is a positive integer greater than or equal to 2. The communication device 100 may convert the M second radio frequency optical signals into M third radio frequency electrical signals, and respectively perform filtering and/or amplification processing on the M third radio frequency electrical signals to obtain M fourth radio frequency electrical signals. Then, the communication device 100 may convert the M fourth radio frequency electrical signals into M third digital electrical signals, and obtain a fourth digital electrical signal based on the M third digital electrical signals. The third digital electrical signal and the second digital electrical signal described above correspond to a same communication protocol, and the first digital electrical signal and the fourth digital electrical signal described above correspond to a same communication protocol. Then, the communication device 100 may convert the fourth digital electrical signal into a second digital optical signal, and send the second digital optical signal. Herein, for a specific process in which the communication device 100 performs the foregoing steps, refer to corresponding descriptions in Embodiment 1. Details are not described herein again.

Optionally, when it is determined that closed-loop check is performed on the electronic device 200 in the M electronic devices, the communication device 100 may generate a fifth radio frequency electrical signal, and perform filtering and/or amplification processing on the fifth radio frequency electrical signal, to obtain a sixth radio frequency electrical signal. Then, the communication device 100 may convert the sixth radio frequency electrical signal into a third radio frequency optical signal, and send the third radio frequency optical signal to the electronic device 200. Herein, for a specific process in which the communication device 100 performs the foregoing steps, refer to corresponding descriptions in Embodiment 1. Details are not described herein again.

Further, the communication device 100 may receive a fourth radio frequency optical signal from the electronic device 200. The fourth radio frequency optical signal is a feedback signal of the third radio frequency optical signal. The communication device 100 may convert the fourth radio frequency optical signal into a seventh radio frequency electrical signal, and perform filtering and/or amplification processing on the seventh radio frequency electrical signal, to obtain an eighth radio frequency electrical signal. Then, the communication device 100 may perform power calibration and/or delay calibration based on the eighth radio frequency electrical signal and the fifth radio frequency electrical signal. Herein, for a specific process in which the communication device 100 performs the foregoing steps, refer to corresponding descriptions in Embodiment 1. Details are not described herein again.

Optionally, when the communication device 100 uses the structure shown in FIG. 15, the communication device 100 may determine, based on a difference between signal parameters such as power and frequency of the eighth radio frequency electrical signal and the fifth radio frequency electrical signal, whether to perform power calibration compensation or delay calibration compensation on each electronic device. In addition, power calibration compensation is implemented by the foregoing 2*M digital step attenuators, and delay calibration compensation may be implemented by the radio frequency conversion module 103 included in the communication device 100.

In some feasible implementations, when the communication device 100 uses the structures shown in FIG. 10 to FIG. 13, the communication device 100 may convert the second digital electrical signal into a twenty-seventh radio frequency electrical signal, and perform filtering and/or amplification processing on the twenty-seventh radio frequency electrical signal, to obtain a twenty-fifth radio frequency electrical signal. Then, the communication device 100 may send the twenty-fifth radio frequency electrical signal.

In some feasible implementations, when the communication device 100 uses the structures shown in FIG. 10 to FIG. 13, the communication device 100 may receive a twenty-sixth radio frequency electrical signal, and perform filtering and/or amplification processing on the twenty-sixth radio frequency electrical signal, to obtain a processed twenty-sixth radio frequency electrical signal. Then, the communication device 100 may convert the processed twenty-sixth radio frequency electrical signal into a fifth digital electrical signal, and obtain a fourth digital electrical signal based on the fifth digital electrical signal and the M third digital electrical signals. The third digital electrical signal and the second digital electrical signal described above correspond to a same communication protocol, and the first digital electrical signal and the fourth digital electrical signal described above correspond to a same communication protocol. Then, the communication device 100 may convert the fourth digital electrical signal into a second digital optical signal, and send the second digital optical signal. Herein, for a specific process in which the communication device 100 performs the foregoing steps, refer to corresponding descriptions in Embodiment 1. Details are not described herein again.

In the communication method provided in this embodiment, the communication device 100 processes the received digital optical signal into the radio frequency optical signal, and sends the radio frequency optical signal to the electronic device. Because the communication device 100 sends the radio frequency optical signal, complex signal processing operations such as first converting the digital optical signal into a digital electrical signal and then converting the digital electrical signal into a digital optical signal are avoided. In this way, a hardware structure of the communication device 100 can be simplified, and power consumption of the communication device can be reduced. In addition, because fewer signal processing operations need to be performed, a signal delay of the communication device 100 is also smaller. Therefore, the communication method provided in this embodiment is used to help reduce a delay and power consumption of the communication device 100.

### Embodiment 3

FIG. 18 is a schematic flowchart of a communication method according to this application. The communication method is applicable to the electronic device 200 described in Embodiment 1. As shown in FIG. 18, the method includes the following steps.

S181: The electronic device 200 receives a first radio frequency optical signal, and converts the first radio frequency optical signal into a twelfth radio frequency electrical signal.

In some feasible implementations, the electronic device 200 may receive the first radio frequency optical signal from the communication device 100, and convert the first radio frequency optical signal into the twelfth radio frequency electrical signal. Optionally, the electronic device 200 may perform optical-electro conversion on the first radio frequency optical signal, to obtain the twelfth radio frequency electrical signal.

S182: The electronic device 200 performs filtering and/or amplification processing based on the twelfth radio frequency electrical signal, to obtain a thirteenth radio frequency electrical signal.

In some feasible implementations, after obtaining the twelfth radio frequency electrical signal, the electronic device 200 may perform filtering and/or amplification processing based on the twelfth radio frequency electrical signal, to obtain the thirteenth radio frequency electrical signal.

In an optional implementation, when the electronic device 200 uses the structure shown in FIG. 2, the electronic device 200 may first decompose the twelfth radio frequency electrical signal into a fourteenth radio frequency electrical signal and a fifteenth radio frequency electrical signal. The fourteenth radio frequency electrical signal and the fifteenth radio frequency electrical signal correspond to different frequency bands. Then, the electronic device performs filtering and/or amplification processing on the fourteenth radio frequency electrical signal, to obtain the thirteenth radio frequency electrical signal. The electronic device 200 may further perform filtering and/or amplification processing on the fifteenth radio frequency electrical signal to obtain a sixteenth radio frequency electrical signal, and send the sixteenth radio frequency electrical signal.

S183: The electronic device 200 sends the thirteenth radio frequency electrical signal.

In some feasible implementations, after obtaining the thirteenth radio frequency electrical signal, the electronic device 200 may send the thirteenth radio frequency electrical signal to the communication device 100.

In some optional implementations, when the electronic device 200 uses the structure shown in FIG. 3, the electronic device 200 may further receive a seventeenth radio frequency electrical signal, and perform filtering and/or amplification processing on the seventeenth radio frequency electrical signal, to obtain an eighteenth radio frequency electrical signal. The electronic device 200 may further obtain a second radio frequency optical signal based on the eighteenth radio frequency electrical signal, and send the second radio frequency optical signal to the communication device 100.

In some optional implementations, when the electronic device 200 uses the structure shown in FIG. 4, the electronic device 200 may further receive a seventeenth radio frequency electrical signal, and perform filtering and/or amplification processing on the seventeenth radio frequency electrical signal, to obtain an eighteenth radio frequency electrical signal. In addition, the electronic device 200 may further receive a nineteenth radio frequency electrical signal, where the nineteenth radio frequency electrical signal and the seventeenth radio frequency electrical signal correspond to different frequency bands. The electronic device 200 may further perform filtering and/or amplification processing on the nineteenth radio frequency electrical signal to obtain a twentieth radio frequency electrical signal. Then, the electronic device 200 may combine the twentieth radio frequency electrical signal and the eighteenth radio frequency electrical signal to obtain a twenty-first radio frequency electrical signal, convert the twenty-first radio frequency electrical signal into a second radio frequency optical signal, and send, to the communication device 100, the second radio frequency optical signal obtained by the electronic device 200 through conversion.

In some feasible implementations, the electronic device 200 may further receive a third radio frequency optical signal, and convert the third radio frequency optical signal into a twenty-second radio frequency electrical signal. The electronic device 200 may perform filtering and/or amplification processing on the twenty-second radio frequency electrical signal to obtain a twenty-third radio frequency electrical signal, then perform filtering and/or amplification processing on the twenty-third radio frequency electrical signal to obtain a twenty-fourth radio frequency electrical signal, and convert the twenty-fourth radio frequency electrical signal into a fourth radio frequency optical signal. Then, the electronic device 200 may send the fourth radio frequency optical signal to the communication device 100.

Optionally, when the electronic device 200 uses the structure shown in FIG. 14, and it is determined that closed-loop check does not need to be performed on the electronic device 200, the electronic device 200 may control the switch component 214 built in the electronic device 200, so that the coupler 212 included in the electronic device 200 is disconnected from the third filter amplifier 207, and the third antenna 208 is connected to the third filter amplifier 207. In this way, the electronic device 200 may convert a radio frequency optical signal received by the electronic device 200 from the communication device 100 into a radio frequency electrical signal, and transmit the radio frequency electrical signal.

Correspondingly, when it is determined that closed-loop check is performed on the electronic device 200, the electronic device 200 may control the switch component 213, so that the coupler 212 included in the electronic device 200 is connected to the third filter amplifier 207, and the third antenna 208 is disconnected from the third filter amplifier 207. In this way, the electronic device 200 can form a feedback signal based on the radio frequency optical signal received by the electronic device 200 from the communication device 100, and feed back the feedback signal to the communication device 100.

In the communication method provided in this embodiment of this application, because the electronic device 200 receives a radio frequency optical signal, the electronic device 200 does not need to perform conversion between a digital optical signal and a digital electrical signal, and does not need to perform conversion between communication protocols. The electronic device 200 only needs to convert the received radio frequency optical signal into a corresponding radio frequency electrical signal, and then, performs filtering and amplification processing to transmit a radio frequency electrical signal. Therefore, according to the method, the electronic device 200 can have a simpler structure, and needs to perform fewer signal processing operations. In this case, a transmission delay generated by a signal at the electronic device 200 is shorter, and power consumption of the electronic device 200 is lower. Therefore, the communication method provided in this embodiment is used to help reduce a delay and power consumption of the electronic device 200.

This application further provides a communication apparatus. The communication apparatus may be configured to perform steps or functions of the communication method provided in Embodiment 2. Optionally, the communication apparatus may include the communication device 100 provided in Embodiment 1, and the communication apparatus may also include a chip or a chip system that can implement the steps or the functions of the communication method provided in Embodiment 2.

This application further provides a communication apparatus. The communication apparatus may be configured to perform steps or functions of the communication method provided in Embodiment 3. Optionally, the communication apparatus may include the electronic device 200 provided in Embodiment 1, and the communication apparatus may also include a chip or a chip system that can implement the steps or the functions of the communication method provided in Embodiment 3.

In the foregoing specific implementations, the objectives, technical solutions, and beneficial effect of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, wherein the method comprises:
receiving a first digital optical signal, and converting the first digital optical signal into a first digital electrical signal;
converting the first digital electrical signal into a second digital electrical signal, wherein the first digital electrical signal and the second digital electrical signal correspond to different communication protocols;
converting the second digital electrical signal into a first radio frequency electrical signal;
obtaining N first radio frequency optical signals based on the first radio frequency electrical signal, wherein N is a positive integer greater than or equal to 1; and
sending the N first radio frequency optical signals.

2. The method according to claim 1, wherein the obtaining the N first radio frequency optical signals based on the first radio frequency electrical signal comprises:
performing filtering and/or amplification processing on the first radio frequency electrical signal, to obtain a second radio frequency electrical signal; and
obtaining the N first radio frequency optical signals based on the second radio frequency electrical signal.

3. The method according to claim 2, wherein N is a positive integer greater than or equal to 2, and the obtaining the N first radio frequency optical signals based on the second radio frequency electrical signal comprises:
obtaining N third radio frequency electrical signals through splitting based on the second radio frequency electrical signal; and
converting the N third radio frequency electrical signals into the N first radio frequency optical signals.

4. The method according to claim 3, wherein the method further comprises:
receiving N second radio frequency optical signals;
converting the N second radio frequency optical signals into N fourth radio frequency electrical signals, and combining the N fourth radio frequency electrical signals into a fifth radio frequency electrical signal;
performing filtering and/or amplification processing on the fifth radio frequency electrical signal, to obtain a sixth radio frequency electrical signal;
converting the sixth radio frequency electrical signal into a third digital signal, and converting the third digital signal into a fourth digital signal, wherein the third digital electrical signal and the second digital electrical signal correspond to a same communication protocol, and the first digital electrical signal and the fourth digital electrical signal correspond to a same communication protocol; and
converting the fourth digital electrical signal into a second digital optical signal, and sending the second digital optical signal.

5. The method according to claim 3 or 4, wherein the method further comprises:
generating a seventh radio frequency electrical signal, and performing filtering and/or amplification processing on the seventh radio frequency electrical signal, to obtain an eighth radio frequency electrical signal;
splitting the eighth radio frequency electrical signal to obtain N ninth radio frequency electrical signals;
respectively converting the N ninth radio frequency electrical signals to obtain N third radio frequency optical signals; and
sending the N third radio frequency optical signals.

6. The method according to claim 5, wherein the method further comprises:
receiving N fourth radio frequency optical signals, wherein the N fourth radio frequency optical signals are feedback signals of the N third radio frequency optical signals;
converting the N fourth radio frequency optical signals into N tenth radio frequency electrical signals, and combining the N tenth radio frequency electrical signals into an eleventh radio frequency electrical signal;
performing filtering and/or amplification processing on the eleventh radio frequency electrical signal, to obtain a twelfth radio frequency electrical signal; and
performing power calibration and/or delay calibration based on the seventh radio frequency electrical signal and the twelfth radio frequency electrical signal.

7. The method according to claim 2, wherein N is equal to 1, and the obtaining the N first radio frequency optical signals based on the first radio frequency electrical signal comprises:
converting the first radio frequency electrical signal into a first radio frequency optical signal; and
sending the N first radio frequency optical signals comprises:
sending the first radio frequency optical signal.

8. The method according to claim 7, wherein the method further comprises:
receiving M second radio frequency optical signals, wherein M is a positive integer greater than or equal to 2;
converting the M second radio frequency optical signals into M third radio frequency electrical signals;
respectively performing filtering and/or amplification processing on the M third radio frequency electrical signals to obtain M fourth radio frequency electrical signals;
converting the M fourth radio frequency electrical signals into M third digital electrical signals, and obtaining a fourth digital electrical signal based on the M third digital electrical signals, wherein the third digital electrical signal and the second digital electrical signal correspond to a same communication protocol, and the first digital electrical signal and the fourth digital electrical signal correspond to a same communication protocol; and
converting the fourth digital electrical signal into a second digital optical signal, and sending the second digital optical signal.

9. The method according to claim 7 or 8, wherein the method further comprises:
generating a fifth radio frequency electrical signal, and performing filtering and/or amplification processing on the fifth radio frequency electrical signal, to obtain a sixth radio frequency electrical signal;
converting the sixth radio frequency electrical signal into a third radio frequency optical signal, and sending the third radio frequency optical signal;
receiving a fourth radio frequency optical signal, wherein the fourth radio frequency optical signal is a feedback signal of the third radio frequency optical signal;
converting the fourth radio frequency optical signal into a seventh radio frequency electrical signal, and performing filtering and/or amplification processing on the seventh radio frequency electrical signal, to obtain an eighth radio frequency electrical signal; and
performing power calibration and/or delay calibration based on the eighth radio frequency electrical signal and the fifth radio frequency electrical signal.

10. A communication method, wherein the method comprises:
receiving a first radio frequency optical signal;
converting the first radio frequency optical signal into a twelfth radio frequency electrical signal;
performing filtering and/or amplification processing based on the twelfth radio frequency electrical signal, to obtain a thirteenth radio frequency electrical signal; and
sending the thirteenth radio frequency electrical signal.

11. The method according to claim 10, wherein the performing filtering and/or amplification processing based on the twelfth radio frequency electrical signal, to obtain the thirteenth radio frequency electrical signal comprises:
performing filtering and/or amplification processing on the twelfth radio frequency electrical signal, to obtain the thirteenth radio frequency electrical signal.

12. The method according to claim 10, wherein the performing filtering and/or amplification processing based on the twelfth radio frequency electrical signal, to obtain the thirteenth radio frequency electrical signal comprises:
decomposing the twelfth radio frequency electrical signal into a fourteenth radio frequency electrical signal and a fifteenth radio frequency electrical signal, wherein the fourteenth radio frequency electrical signal and the fifteenth radio frequency electrical signal correspond to different frequency bands; and
performing filtering and/or amplification processing on the fourteenth radio frequency electrical signal, to obtain the thirteenth radio frequency electrical signal.

13. The method according to claim 12, wherein the method further comprises:
performing filtering and/or amplification processing on the fifteenth radio frequency electrical signal, to obtain a sixteenth radio frequency electrical signal; and
sending the sixteenth radio frequency electrical signal.

14. The method according to any one of claims 10 to 13, wherein the method further comprises:
receiving a seventeenth radio frequency electrical signal;
performing filtering and/or amplification processing on the seventeenth radio frequency electrical signal, to obtain an eighteenth radio frequency electrical signal;
processing the eighteenth radio frequency electrical signal to obtain a second radio frequency optical signal; and
sending the second radio frequency optical signal.

15. The method according to claim 14, wherein the processing the eighteenth radio frequency electrical signal to obtain the second radio frequency optical signal comprises:
converting the eighteenth radio frequency electrical signal into the second radio frequency optical signal.

16. The method according to claim 14, wherein the method further comprises:
receiving a nineteenth radio frequency electrical signal, wherein the nineteenth radio frequency electrical signal and the seventeenth radio frequency electrical signal correspond to different frequency bands.

17. A communication apparatus, configured to implement the method according to any one of claims 1 to 9.

18. The communication apparatus according to claim 17, wherein the communication apparatus comprises a communication device, a chip, a central unit CU, or a distributed unit DU.

19. A communication apparatus, configured to implement the method according to any one of claims 10 to 16.

20. The communication apparatus according to claim 19, wherein the communication apparatus comprises an electronic device or a chip.

21. An electronic device, wherein the electronic device comprises a first optical module, a first filter amplifier, and a first antenna;
the first optical module is configured to convert a received first radio frequency optical signal into a twelfth radio frequency electrical signal;
the first filter amplifier is configured to perform filtering and amplification based on the twelfth radio frequency electrical signal, to obtain a thirteenth radio frequency electrical signal; and
the first antenna is configured to transmit the thirteenth radio frequency electrical signal.

22. The electronic device according to claim 21, wherein the electronic device further comprises a first duplexer, a second filter amplifier, and a second antenna, wherein
the first duplexer is configured to decompose the twelfth radio frequency electrical signal into a fourteenth radio frequency electrical signal and a fifteenth radio frequency electrical signal, wherein the fourteenth radio frequency electrical signal and the fifteenth radio frequency electrical signal correspond to different frequency bands;
the second filter amplifier is configured to perform filtering and/or amplification processing on the fifteenth radio frequency electrical signal, to obtain a sixteenth radio frequency electrical signal; and
the second antenna is configured to send the sixteenth radio frequency electrical signal; and
that the first filter amplifier is configured to perform filtering and amplification based on the twelfth radio frequency electrical signal, to obtain the thirteenth radio frequency electrical signal comprises:
the first filter amplifier is configured to perform filtering and/or amplification processing on the fourteenth radio frequency electrical signal, to obtain the thirteenth radio frequency electrical signal.

23. A communication device, wherein the communication device comprises a second optical module, a gateway control module, a radio frequency conversion module, and a radio frequency transceiver module;
the second optical module is configured to: receive a first digital optical signal, and convert the first digital optical signal into a first digital electrical signal;
the gateway control module is configured to convert the first digital electrical signal into a second digital electrical signal, wherein the first digital electrical signal and the second digital electrical signal correspond to different communication protocols;
the radio frequency conversion module is configured to convert the second digital electrical signal into a first radio frequency electrical signal; and
the radio frequency transceiver module is configured to: obtain N first radio frequency optical signals based on the first radio frequency electrical signal, and send the N first radio frequency optical signals, wherein N is a positive integer greater than or equal to 1.

24. The communication device according to claim 23, wherein the radio frequency transceiver module comprises a filtering and amplification module and a transceiver module;
the filtering and amplification module is configured to perform filtering and/or amplification processing on the first radio frequency electrical signal, to obtain a second radio frequency electrical signal; and
the transceiver module is configured to obtain N first radio frequency optical signals based on the second radio frequency electrical signal.

25. The communication device according to claim 24, wherein the filtering and amplification module comprises a fifth filter amplifier, and the transceiver module comprises a first radio frequency power divider and M third optical modules, wherein M is a positive integer greater than or equal to 2, and N is equal to M;
the fifth filter amplifier is configured to perform filtering and/or amplification processing on the first radio frequency electrical signal, to obtain the second radio frequency electrical signal;
the first radio frequency power divider is configured to split the second radio frequency electrical signal, to obtain M third radio frequency electrical signals; and
the M third optical modules are configured to: respectively convert the M third radio frequency electrical signals to obtain M first radio frequency optical signals, and transmit the M first radio frequency optical signals.

26. The communication device according to claim 25, wherein the filtering and amplification module further comprises a sixth filter amplifier, and the transceiver module further comprises a second radio frequency power divider;
the M third optical modules are further configured to: receive M second radio frequency optical signals, and convert the M second radio frequency optical signals into M fourth radio frequency electrical signals;
the second radio frequency power divider is further configured to combine the M fourth radio frequency electrical signals into a fifth radio frequency electrical signal;
the sixth filter amplifier is configured to perform filtering and/or amplification processing on the fifth radio frequency electrical signal, to obtain a sixth radio frequency electrical signal;
the radio frequency conversion module is further configured to convert the sixth radio frequency electrical signal into a third digital signal;
the gateway control module converts the third digital signal into a fourth digital signal, wherein the third digital electrical signal and the second digital electrical signal correspond to a same communication protocol, and the first digital electrical signal and the fourth digital electrical signal correspond to a same communication protocol; and
the second optical module is further configured to: convert the fourth digital electrical signal into a second digital optical signal, and send the second digital optical signal.

27. A computer-readable storage medium, wherein the computer-readable storage medium stores a computer program or instructions, and when the computer program or the instructions are run, the method according to any one of claims 1 to 9 or the method according to any one of claims 10 to 16 is performed.
